# EUROPÄISCHE PATENTSCHRIFT

(11) **EP 3 444 114 B1**
(45) Veröffentlichungstag und Bekanntmachung des Hinweises auf die Patenterteilung: **25.10.2023**
(21) Anmeldenummer: 17186923.3
(22) Anmeldetag: 18.08.2017
(51) Int. Cl.: B32B 27/34, B32B 27/08, B32B 27/20, B29C 45/14, C08K 3/40, C08G 69/14, C08G 69/26, C08G 69/36, C08L 77/00, C08L 77/02, C08L 77/06, C08K 7/14

(54) **VERSTÄRKTE POLYAMID-FORMMASSEN MIT GERINGEM HAZE UND FORMKÖRPER DARAUS**
REINFORCED POLYAMIDE MOULDING COMPOUNDS WITH LOW HAZE AND MOULDS THEREFROM
MATIÈRES À MOULER EN POLYAMIDE RENFORCÉ À FAIBLE VALEUR HAZE ET CORPS AINSI MOULÉ

(43) Veröffentlichungstag der Anmeldung: 20.02.2019
(73) Patentinhaber: EMS-CHEMIE AG, 7013 Domat/Ems (CH)
(72) Erfinder: AEPLI, Etienne, 7013 Domat/Ems (CH); HOFFMANN, Botho, 7013 Domat/Ems (CH)
(74) Vertreter: Pfenning, Meinig & Partner mbB

(56) Entgegenhaltungen:
- US-A1- 2016 369 098

## Beschreibung

Die vorliegende Erfindung betrifft mit Glas gefüllte Polyamid-Formmassen mit geringem Haze daraus hergestellte Formkörper und deren Verwendung.

Aufgrund ihrer sehr guten optischen und mechanischen Kennwerte ist der Einsatz von amorphen oder mikrokristallinen Polyamid-Formmassen für optische Anwendungen im Bereich von Automobilteilen, Elektronik, optischen Bauteilen, Blenden, Gehäusen, Sichtflächen usw. weit verbreitet. Auch Blends aus amorphen oder mikrokristallinen Polyamiden und teilkristallinen Polyamiden können für diese Anwendungen verwendet werden. Das Zumischen von teilkristallinen Polyamiden zu amorphen Polyamiden führt in vielen Fällen zu einer Verbesserung der Zähigkeit, insbesondere der Schlagzähigkeit.

Um insbesondere Eigenschaften wie die Steifheit, Festigkeit, Verzugsminderung und Oberflächenkratzfestigkeit zu steigern, können den Formmassen faserförmige oder partikuläre Glasfüller zugesetzt werden. Dabei wird regelmäßig eine Verschlechterung der optischen Eigenschaften, insbesondere des Haze und der Transparenz, beobachtet.

Der im Stand der Technik verbreitete Ansatz zur Unterdrückung einer Verschlechterung der optischen Eigenschaften ist die Anpassung des Brechungsindex des Glases an den des Polymers. In EP 2 169 008 A1 wird hierfür ein Glas vorgeschlagen, dessen Bereiche an Netzwerkbildnern, Netzwerkwandlern und Zwischenoxiden so breit gewählt werden kann, dass der Brechungsindex im Bereich von 1,510 bis 1,540 gemessen bei einer Wellenlänge von 589 nm (nD) eingestellt werden kann. Ferner beschreibt die Schrift, dass der für das Glas einzustellende Brechungsindex bei Zugabe des Füllers zum Polymer nicht stärker als 0,002 von dem des Polymers abweichen soll.

WO 2015/132510 A1 betrifft ebenfalls mit Glasfüllern verstärkte, transparente Polyamid-Formmassen. Zur Einstellung des Brechungsindex der ansonsten auf amorphen Polyamiden basierenden Formmassen wird zumindest ein teilkristallines Polyamid in die Polyamid-Formmasse eingebracht. Die in den Beispielen gearbeiteten anspruchsgemäßen Polyamid-Formmassen weisen Glasübergangstemperaturen von maximal 135°C auf. Höhere Glasübergangstemperaturen wurden offenbar nicht gewünscht, da bei der Diskussion des Standes der Technik bereits Probleme mit der Verarbeitung, insbesondere mit Materialabtrag, von Formmassen mit Glasübergangstemperaturen von >150°C thematisiert wurden.

Der Stand der Technik weist erhebliche Nachteile auf, die durch die vorliegende Erfindung verbessert werden sollen. So erfordert die Erstellung eines Glases mit der Genauigkeit eines Brechungsindex von 0,002 einen erheblichen technischen Aufwand hinsichtlich einer möglichst genauen Glaszusammensetzung, der Rohstoffreinheit, einer genauen Schmelzehomogenität und dem anzuwendenden Temperaturregime bei der Glasherstellung, da diese Faktoren Einfluss auf den Brechungsindex des Glases haben. Für Gläser, die nur als Material für Füller dienen und die möglichst kostengünstig produziert werden sollen, ist ein solcher Aufwand wirtschaftlich kaum sinnvoll, wenn jeweils für ein bestimmtes Polyamid mit einem bestimmten Brechungsindex ein neues Glas erstellt werden muss.

Abhängig von den Anforderungen einer gegeben Anwendung, besteht häufig die Notwendigkeit die Komponenten einer Polymermatrix zu variieren, um ein bestimmtes Eigenschaftsprofil zu erreichen. Dadurch ändert sich aber auch regelmäßig der Brechungsindex des Polymers, wodurch jeweils ein darauf angepasstes Glas mit dem beschriebenen Aufwand erstellt werden müsste, um verstärkte Formmassen mit guten optischen Eigenschaften zu erhalten.

Es besteht daher ein Bedarf mit geringem Aufwand ein Matrixpolymer so modifizieren zu können, dass dieses trotz der Einarbeitung eines Glasfüllers gute optische Eigenschaften, insbesondere Haze und Transparenz, beibehält.

Die vorliegende Erfindung verfolgt die Aufgabenstellung eine mit einem Glasfüller mit relativ hohem Brechungsindex, insbesondere im Bereich von 1,540 bis 1,600, verstärkte Polyamid-Formmasse auf Basis von transparenten Polyamiden bereitzustellen. Dabei soll die Polyamid-Formmasse eine gute Transparenz und einen niedrigen Haze-Wert bei gleichzeitig guten mechanischen Eigenschaften aufweisen. Ebenso war es Aufgabe der vorliegenden Erfindung Polyamid-Formmassen mit hoher Wärmeformbeständigkeit bereitzustellen, ohne dass die Verarbeitungseigenschaften verschlechtert werden.

Diese Aufgabe wird durch die Polyamid-Formmassen gemäß Anspruch 1 gelöst, welche die folgenden Komponenten enthalten oder aus diesen Komponenten bestehen:
(A) 40 bis 95 Gew.-% einer Polyamidmischung bestehend aus den Polyamiden (A1) und (A2), wobei
   (A1) 42 bis 68 Gew.-% mindestens eines teilkristallinen Polyamids, ausgewählt aus der Gruppe bestehend aus PA 46, PA 66, PA 66/6, PA 610, PA 612, PA 614, PA 615, PA 616 und Mischungen daraus, ist; und
   (A2) 32 bis 58 Gew.-% mindestens eines transparenten, teilaromatischen Polyamids mit zumindest 30 Mol-% an Monomeren mit aromatischen Struktureinheiten, bezogen auf die Gesamtmenge an Diaminen und Dicarbonsäuren im Polyamid (A2), ist, welches amorph oder mikrokristallin ist;
(B) 5 bis 50 Gew.-% mindestens eines Glasfüllers mit einem Brechungsindex im Bereich von 1,540 bis 1,600;
(C) 0 bis 10 Gew.-% mindestens eines Zusatzstoffes.

Dabei sind die folgenden Maßgaben zu erfüllen:
- Die Gewichtsanteile der Komponenten (A) bis (C) ergänzen sich auf 100 Gew.-%.
- Die Gewichtsanteile der Komponenten (A1) und (A2) ergänzen sich auf 100 Gew.-% der Komponente (A).
- Das mindestens eine transparente Polyamid (A2) weist eine Transparenz von mindestens 90 % und einen Haze von höchstens 3 % auf.

Vorteilhafte Ausführungsformen der erfindungsgemäßen Polyamid-Formmasse sind in den abhängigen Ansprüchen 2 bis 13 angegeben.

Weiterhin betrifft die vorliegende Erfindung gemäß Anspruch 14 Formkörper, welche die erfindungsgemäße Polyamid-Formmasse enthalten und bevorzugt aus dieser bestehen. Diese Formkörper sind insbesondere ausgewählt aus der Gruppe bestehend aus Komponenten von Mobiltelefonen, Tablets, Gehäusen von elektronischen Geräten, Dekorteilen in Fahrzeugen und Haushalt, Abdeckungen, Sichtflächen, hinterleuchtete Komponenten, Blenden, Behältern, Fahrzeugschlüsseln und Freizeit- und Outdoorartikeln.

Bevorzugte Ausführungsformen dieser Formkörper werden in den Ansprüchen 15 und 16 angegeben.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-amino-cyclohexyl)methan (auch als 4,4'-Diaminodicyclohexylmethan bezeichnet, CAS-Nr. 1761-71-3), TMDC für Bis(4-amino-3,5-dimethylcyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5), BAC für 1,4-Bis(aminomethyl)cyclohexan (CAS-Nr. 2549-93-1).

### Mengenangaben

Die Polyamid-Formmassen gemäß der vorliegenden Erfindung enthalten die Komponenten (A) bis (C), oder bestehen bevorzugt ausschließlich aus den Komponenten (A) bis (C), es gilt dabei die Maßgabe, dass sich die Komponenten (A) bis (C) in Summe auf 100 Gew.-% ergänzen. Die festgelegten Bereiche der Mengenangaben für die einzelnen Komponenten (A) bis (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

### Amorphe oder mikrokristalline Polyamide

Amorphe oder mikrokristalline Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 25 J/g, besonders bevorzugt von maximal 22 J/g, ganz besonders bevorzugt 0 bis 20 J/g.

Mikrokristalline Polyamide besitzen neben einer Glasübergangstemperatur auch einen Schmelzpunkt. Sie haben jedoch eine Morphologie, bei der die Kristallite eine so kleine Dimension haben, dass eine daraus hergestellte Platte mit einer Dicke von 2 mm noch transparent ist, d.h. ihre Lichttransmission mindestens 90 % und ihr Haze höchstens 3 % beträgt, gemessen nach ASTM D 1003-13 (2013).

Amorphe Polyamide weisen verglichen mit den mikrokristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g.

Amorphe Polyamide besitzen auf Grund ihrer Amorphizität keinen Schmelzpunkt.

### Teilkristalline Polyamide

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 25 J/g, besonders bevorzugt von wenigstens 35 J/g, ganz besonders bevorzugt von wenigstens 40 J/g aufweisen. Eine aus teilkristallinen Polyamiden hergestellte Platte mit einer Dicke von 2 mm ist nicht transparent, d.h. ihre Lichttransmission liegt unter 90 % und/oder ihr Haze über 3 %, gemessen nach ASTM D 1003-13 (2013).

### Transparente Polyamide

Im Sinne der vorliegenden Erfindung liegt ein transparentes Polyamid vor, wenn dessen nach ASTM D 1003-13 (2013) an Platten mit einer Dicke von 2 mm gemessene Lichttransmission mindestens 90 % und dessen Haze höchstens 3 % beträgt. Wenn im Folgenden von transparenten Polyamiden gesprochen wird, sind stets amorphe oder mikrokristalline Polyamide gemeint, die die obige Definitionen bezüglich Transparenz und Schmelzwärme erfüllen.

### Haze, Transparenz

Der Haze beschreibt das Streuverhalten eines Stoffes, die Transparenz die Lichttransmission durch den Stoff. Im Rahmen der vorliegenden Erfindung wird unter dem Haze bzw. der Transparenz der an einem aus der Polyamid-Formmasse hergestellten Formkörper (2 mm dicke Platten mit Breite und Länge: 60 × 60 mm) nach ASTM D1003 auf einem Messgerät Haze Gard Plus der Firma BYK Gardner mit CIE Lichtart C bei 23 °C gemessene Haze bzw. Transparenz (Gesamttransmission) verstanden.

### Brechungsindex

Der Brechungsindex wird in den Formeln und im experimentellen Teil mit "n" abgekürzt. Im Hinblick auf den Glasfüller, insbesondere Glasfasern, wird immer der Brechungsindex gemessen bei einer Wellenlänge von 589 nm angegeben. Die Bestimmung des Brechungsindex von Glasfüllern, insbesondere Glasfasern, erfolgte mit der Methode der Beckeschen Linie und unter Verwendung von Immersionsflüssigkeiten bezogen auf 589 nm in Anlehnung an Methode B der ISO 489(1999-04). Der Brechungsindex der Polyamide (A1) und (A2) wurde an 2 mm dicken Platten (60 × 60 × 2 mm) bei einer Wellenlänge von 589 nm und 23°C mittels eines Abbe-Refraktometers der Firma Carl Zeiss gemäss Methode A der ISO 489 (1999-04) bestimmt. Als Kontaktflüssigkeit wurde 1-Bromnaphthalin verwendet.

### Komponente (A)

Die erfindungsgemäße Polyamid-Formmasse enthält 40 bis 95 Gew.-% der Komponente (A), bezogen auf die Summe der Komponenten (A) bis (C), wobei es sich um eine Mischung bestehend aus den Polyamiden (A1) und (A2) handelt. Die Gewichtsanteile der Komponenten (A1) und (A2) ergänzen sich dabei auf 100 Gew.-% der Komponente (A). (A1) ist dabei mindestens ein teilkristallines, aliphatisches Polyamid ausgewählt aus der Gruppe bestehend aus PA 46, PA 66, PA 66/6, PA 610, PA 612, PA 614, PA 615, PA 616 und Mischungen daraus.

Polyamid (A2) ist mindestens ein transparentes, teilaromatisches Polyamid mit zumindest 30 Mol-% an Monomeren mit aromatischen Struktureinheiten, bezogen auf die Gesamtmenge an Diaminen und Dicarbonsäuren im Polyamid (A2) und ist amorph oder mikrokristallin. Insbesondere ist das Polyamid (A2) amorph.

Weiterhin gilt die Maßgabe, dass das transparente Polyamid (A2) eine Transparenz von mindestens 90 % und einen Haze von höchstens 3 % aufweist.

Im Folgenden werden bevorzugte Ausführungsformen der Komponente (A) ausgeführt.

Gemäß einer bevorzugten Ausführungsform der vorliegenden Erfindung sind die aliphatischen Polyamide (A1) ausgewählt aus der Gruppe bestehend aus PA 66, PA610, PA 612, PA 616 und Mischungen daraus. Diese Polyamide entsprechen der vorhergehenden Definition für teilkristalline Polyamide.

Bevorzugt haben die Polyamide der Komponente (A1) eine relative Viskosität, gemessen nach ISO 307 (2007) in einer Lösung von 0,5 g Polymer in 100 ml m-Kresol bei 20°C, im Bereich von 1,50 bis 2,80, besonders bevorzugt von 1,60 bis 2,40 und insbesondere bevorzugt von 1,70 bis 2,20.

Nach einer weiteren bevorzugten Ausführungsform der vorliegenden Erfindung weist die Komponente (A1) eine nach ISO 11357-3 bestimmte Schmelztemperatur von mindestens 180°C, besonders bevorzugt im Bereich von 200 bis 300°C und ganz besonders bevorzugt im Bereich von 210°C bis 270°C auf.

Unter den teilkristallinen, aliphatischen Polyamiden (A1) sind PA 66, PA 610, PA 612 besonders bevorzugt und PA 66 ist insbesondere bevorzugt.

Gemäß einer bevorzugten Ausführungsform der vorliegenden Erfindung ist die Komponente (A2) amorph.

Nach einer bevorzugten Ausführungsform der vorliegenden Erfindung liegt der Anteil von Komponente (A) in der Polyamid-Formmasse im Bereich von 49 bis 90 Gew.-%, bevorzugt von 50 bis 90 Gew.-%, besonders bevorzugt 55 bis 89,9 Gew.-% und insbesondere bevorzugt 67 bis 84,9 Gew.%, jeweils bezogen auf die Summe der Komponenten (A) bis (C).

Eine andere bevorzugte Ausführungsform der vorliegenden Erfindung sieht vor, dass die Polyamidmischung (A) aus 45 bis 65 Gew.-%, bevorzugt aus 48 bis 63 Gew.-% Polyamid (A1) und aus 35 bis 55 Gew.-%, besonders bevorzugt aus 37 bis 52 Gew.-% Polyamid (A2) besteht. Die Gewichtsangaben von (A1) und (A2) ergänzen sich dabei auf 100 Gew.-% der Komponenten (A).

Eine weitere bevorzugte Ausführungsform der vorliegenden Erfindung sieht vor, dass die Monomere mit aromatischen Struktureinheiten für das transparenten Polyamid (A2) aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyl-dicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4'-dicarbonsäure und 2,5-Pyridindicarbonsäure, Xylylendiaminen, insbesondere meta-Xylylendiamin und para-Xylylendiamin, und Mischungen davon.

Besonders bevorzugt sind die Monomere mit aromatischen Struktureinheiten für das transparente Polyamid (A2) ausschließlich ausgewählt aus der Gruppe bestehend aus Terephthalsäure, Isophthalsäure, 1,5-Naphthalindicarbonsäure und 2,6-Naphthalindicarbonsäure.

Gemäß einer weiteren bevorzugten Ausführungsform der vorliegenden Erfindung sind die transparenten Polyamide (A2) aus den folgenden Monomeren aufgebaut:
(a-A2) 0 bis 100 Mol-% an cycloaliphatischen Diaminen, bezogen auf die Gesamtmenge an Diaminen;
(b-A2) 0 bis 100 Mol-% an Diaminen mit aromatischen Struktureinheiten, bezogen auf die Gesamtmenge an Diaminen;
(c-A2) 0 bis 100 Mol-% an offenkettigen, aliphatischen Diamine, bevorzugt mit 6 bis 10 Kohlenstoffatomen, insbesondere mit 6 Kohlenstoffatomen, bezogen auf die Gesamtmenge an Diaminen;
(d-A2) 0 bis 70 Mol-% an offenkettigen, aliphatischen Dicarbonsäuren, bezogen auf die Gesamtmenge an Dicarbonsäuren;
(e-A2) 30 bis 100 Mol-% an aromatischen Dicarbonsäuren, bezogen auf die Gesamtmenge an Dicarbonsäuren;
(f-A2) 0 bis 70 Mol-% an cycloaliphatischen Dicarbonsäuren, bezogen auf die Gesamtmenge an Dicarbonsäuren;
(g-A2) 0 bis 40 Gew.-% an Lactamen und/oder Aminocarbonsäuren mit 6 bis12 Kohlenstoffatomen, bezogen auf die Gesamtmenge der Monomere (a-A2) bis (g-A2);
wobei die Summe der Diamine (a-A2), (b-A2) und (c-A2) 100 Mol-% ergibt; wobei die Summe der Dicarbonsäuren (d-A2), (e-A2) und (f-A2) 100 Mol-% ergibt; und wobei die Summe der Monomeren (b-A2) und (e-A2) zumindest 30 Mol-% bezogen auf die Summe der gesamten Diamine und der gesamten Dicarbonsäuren im Polyamid (A2) beträgt. Besonders bevorzugt liegt der Gehalt an aromatischen Dicarbonsäuren (e-A2) im Bereich von 60 bis 100 Mol-%, der Gehalt der offenkettigen, aliphatischen Dicarbonsäuren (d-A2) im Bereich von 0 bis 40 Mol-% und der Gehalt an cycloaliphatischen Dicarbonsäuren (f-A2) im Bereich von 0 bis 40 Mol-%, jeweils bezogen auf die Gesamtmenge an Dicarbonsäuren. Ganz besonders bevorzugt ist (A2) frei an cycloaliphatischen Dicarbonsäuren (f-A2). Weiterhin bevorzugt liegt der Gehalt an cycloaliphatischen Diaminen (a-A2) im Bereich von 0 bis 50 Mol-%, insbesondere im Bereich von 10 - 40 Mol-%, der Gehalt der offenkettigen, aliphatischen Diaminen (c-A2) im Bereich von 50 bis 100 Mol-%, insbesondere 60 bis 90 Mol-%, und der Gehalt an cycloaliphatischen Diaminen (b-A2) im Bereich von 0 bis 50 Mol-%, insbesondere im Bereich von 0 bis 30 Mol-%, jeweils bezogen auf die Gesamtmenge an Diaminen. Ganz besonders bevorzugt ist (A2) frei von Diaminen (b-A2). Weiterhin ist (A2) bevorzugt frei von Lactamen und Aminocarbonsäuren (g-A2), insbesondere frei von Aminoundecansäure.

Nach einer anderen bevorzugten Ausführungsform der vorliegenden Erfindung enthält das transparente Polyamid (A2) mindestens 35 Mol-%, bevorzugt mindestens 40 Mol-%, besonders bevorzugt im Bereich von 30 bis 100 Mol-%, 35 bis 80 Mol-% oder 40 bis 60 Mol-% an Monomeren mit aromatischen Struktureinheiten, bezogen auf die Gesamtmenge an Diaminen und Dicarbonsäuren im Polyamid (A2).

Eine andere bevorzugte Ausführungsform der vorliegenden Erfindung sieht vor, dass die Polyamid-Formmasse genau ein Polyamid (A1) enthält. Nach einer weiteren bevorzugten Ausführungsform der vorliegenden Erfindung enthält die Polyamid-Formmasse genau ein Polyamid (A2). Besonders bevorzugt ist es, dass die Polyamid-Formmasse genau ein Polyamid (A1) und genau ein Polyamid (A2) enthält.

Eine andere bevorzugte Ausführungsform der vorliegenden Erfindung sieht vor, dass das cycloaliphatische Diamin (a-A2) ausgewählt ist aus der Gruppe bestehend aus Bis-(4-amino-3-methyl-cyclohexyl)-methan (MACM), Bis-(4-amino-cyclohexyl)-methan (PACM), Bis-(4-amino-3-ethyl-cyclohexyl)-methan, Bis-(4-amino-3,5-dimethyl-cyclohexyl)-methan, 2,6-Norbornandiamin (2,6-Bis-(aminomethyl)-norbornan), 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus.

Besonders bevorzugt ist das cycloaliphatischen Diamine (a-A2) ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Nach einer anderen bevorzugten Ausführungsform der vorliegenden Erfindung ist das aromatische Diamin (b-A2) ausgewählt aus der Gruppe bestehend aus Xylylendiamin, insbesondere meta-Xylylendiamin und para- Xylylendiamin und Mischungen daraus.

Besonders bevorzugt ist das Diamin mit aromatischen Struktureinheiten (b-A2) ausgewählt als meta-Xylylendiamin.

Gemäß einer anderen bevorzugten Ausführungsform ist das Diamin (c-A2) ausgewählt aus der Gruppe bestehend aus 1,4-Butandiamin, 1,5-Pentandiamin, 2-Methyl-1,5-pentandiamin, Hexandiamin, insbesondere 1,6-Hexandiamin, 2,2,4-Trimethyl-1,6-hexamethylendiamin, 2,4,4-Trimethyl-1,6-hexamethylendiamin, Nonandiamin, insbesondere 1,9-Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus.

Besonders bevorzugt ist das offenkettige, aliphatischen Diamine (c-A2) ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon.

Eine weitere bevorzugte Ausführungsform der vorliegenden Erfindung sieht vor, dass die aliphatische Dicarbonsäure (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus.

Besonders bevorzugt ist die offenkettige, aliphatischen Dicarbonsäure (d-A2) ausgewählt aus der Gruppe bestehend aus Dicarbonsäuren mit 6 bis 12 Kohlenstoffatomen, insbesondere 1,6-Hexandisäure, 1,10-Decandisäure, 1,12-Dodecandisäure, und Mischungen hiervon.

Nach einer weiteren bevorzugten Ausführungsform der vorliegenden Erfindung ist die aromatische Dicarbonsäure (e-A2) ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon.

Besonders bevorzugt ist die aromatischen Dicarbonsäure (e-A2) ausgewählt aus der Gruppe bestehend aus Terephthalsäure, Isophthalsäure und Mischungen hiervon.

Eine weitere bevorzugte Ausführungsform der vorliegenden Erfindung sieht vor, dass die cycloaliphatische Dicarbonsäure (f-A2) ausgewählt ist aus der Gruppe bestehend aus 1,3-Cyclopentandicarbonsäure, 1,3-Cyclohexandicarbonsäure, 1,4-Cyclohexandicarbonsäure, 2,3-Norbornandicarbonsäure, 2,6-Norbornandicarbonsäure und Mischungen daraus.

Besonders bevorzugt ist die cycloaliphatischen Dicarbonsäure (f-A2) ausgewählt aus der Gruppe bestehend aus 1,3-Cyclohexandicarbonsäure und 1,4-Cyclohexandicarbonsäure und Mischungen hiervon.

Nach einer weiteren bevorzugten Ausführungsform der vorliegenden Erfindung ist das Lactam und/oder die α,ω-Aminocarbonsäuren (g-A2) ausgewählt aus der Gruppe bestehend aus m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Caprolactam, α,ω-Aminocapronsäure, Laurinlactam, α,ω-Aminoundecansäure und α,ω-Aminododecansäure und Mischungen daraus.

Bevorzugt sind die sind die Lactame und/oder Aminocarbonsäuren (g-A2) ausgewählt aus der Gruppe bestehend aus Caprolactam, Aminocapronsäure, Aminoundecansäure, Laurinlactam und Aminododecansäure und Mischungen hiervon.

Eine weitere bevorzugte Ausführungform der vorliegenden Erfindung sieht vor, dass das cycloaliphatische Diamin (a-A2) ausgewählt ist aus der Gruppe bestehend aus Bis-(4-amino-3-methyl-cyclohexyl)-methan, Bis-(4-aminocyclohexyl)-methan, Bis-(4-amino-3-ethyl-cyclohexyl)-methan, Bis-(4-amino-3,5-dimethyl-cyclohexyl)-methan, 2,6-Norbornandiamin, 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus und das aromatische Diamin (b-A2) ausgewählt ist aus der Gruppe bestehend aus Xylylendiamin, insbesondere meta-Xylylendiamin und para-Xylylendiamin und Mischungen daraus und das Diamin (c-A2) ausgewählt ist aus der Gruppe bestehend aus Hexandiamin, insbesondere 1,6-Hexandiamin, Nonandiamin, insbesondere 1,9-Nonandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus und die aliphatische Dicarbonsäure (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus und die aromatische Dicarbonsäure (e-A2) ausgewählt ist aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, Biphenyldicarbonsäuren, insbesondere Biphenyl-2,2'-dicarbonsäure, 4,4'-Diphenyldicarbonsäure, 3,3'-Diphenyldicarbonsäure, 4,4'-Diphenyletherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon und die cycloaliphatische Dicarbonsäure (f-A2) ausgewählt ist aus der Gruppe bestehend aus 1,3-Cyclohexandicarbonsäure, 1,4-Cyclohexandicarbonsäure und Mischungen daraus und das Lactam und/oder die α,ω-Aminocarbonsäuren (g-A2) ausgewählt ist aus der Gruppe bestehend aus m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA), besonderes bevorzugt sind Caprolactam, α,ω-Aminocapronsäure, Laurinlactam, α,ω-Aminoundecansäure und α,ω-Aminododecansäure und Mischungen daraus.

Besonders bevorzugt sind die cycloaliphatischen Diamine (a-A2) ausgewählt aus der Gruppe bestehend aus Bis-(4-amino-3-methyl-cyclohexyl)-methan (MACM) und Bis(4-amino-cyclohexyl)methan (PACM) und Mischungen hiervon und die Diamine mit aromatischen Struktureinheiten (b-A2) sind ausgewählt aus der Gruppe bestehend aus meta-Xylylendiamin und para-Xylylendiamin und Mischungen hiervon und die offenkettigen, aliphatischen Diamine (c-A2) sind ausgewählt aus der Gruppe bestehend aus Diaminen mit 6 bis 10 Kohlenstoffatomen, insbesondere 1,6-Hexandiamin, 1,9-Nonandiamin, 1,10-Decandiamin und Mischungen hiervon und die offenkettigen, aliphatischen Dicarbonsäuren (d-A2) sind ausgewählt sind aus der Gruppe bestehend aus Dicarbonsäuren mit 6 bis 12 Kohlenstoffatomen, insbesondere 1,6-Hexandisäure, 1,10-Decandisäure, 1,12-Dodecandisäure und Mischungen hiervon und die aromatischen Dicarbonsäuren (e-A2) sind ausgewählt aus der Gruppe bestehend aus Terephthalsäure, Isophthalsäure und Mischungen hiervon und die cycloaliphatischen Dicarbonsäuren (f-A2) sind ausgewählt aus der Gruppe bestehend aus 1,3-Cyclohexandicarbonsäure und 1,4-Cyclohexan-dicarbonsäure und Mischungen hiervon und die Lactame und/oder Aminocarbonsäuren (g-A2) sind ausgewählt aus der Gruppe bestehend aus Caprolactam, Aminocapronsäure, Aminoundecansäure, Laurinlactam und Aminododecansäure und Mischungen hiervon.

Gemäß einer weiteren bevorzugten Ausführungsform der vorliegenden Erfindung ist das Polyamid (A2) ausgewählt aus der Gruppe bestehend aus PA 6I/6T, PA 10I/10T, PA DI/DT (D = 2-Methyl-1,5-pentandiamin), PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT und Mischungen hiervon.

Eine andere bevorzugte Ausführungsform vorliegender Erfindung sieht vor, dass die Komponente (A2) eine nach ISO 11357-2 bestimmte Glasübergangstemperatur von mindestens 120°C, bevorzugt mindestens 125°C besonders bevorzugt 135°C und insbesondere bevorzugt 140°C auf.

Nach einer anderen bevorzugten Ausführungsform der vorliegenden Erfindung enthält das Polyamid (A2) höchstens 30 Gew.-%, besonders bevorzugt höchstens 20 Gew.-% an Lactamen und Aminocarbonsäuren, insbesondere ist es frei von Lactamen und Aminocarbonsäuren, insbesondere frei von Aminoundecansäure.

Bevorzugt hat Komponente (A2) eine relative Viskosität, gemessen in einer Lösung von 0,5 g Polymer in 100 ml m-Kresol bei 20°C, im Bereich von 1,35 bis 2,40, bevorzugt von 1,40 bis 1,90 und insbesondere bevorzugt von 1,42 bis 1,80.

### Komponente (B)

Die erfindungsgemäße Formmasse enthält als Komponente (B) mindestens einen Glasfüller.

Der Glasfüller (B) ist mit 5 bis 50 Gew.-%, bevorzugt mit 10 bis 45 Gew.-% und besonders bevorzugt mit 10 bis 40 Gew.-% und insbesondere bevorzugt mit 15 bis 35 Gew.-% oder 15 bis 30 Gew.-% in der Polyamid-Formmasse enthalten, wobei diese Mengenangaben auf die sich aus den Komponenten (A), (B) und (C) zu 100 Gew.-% ergebende Polyamid-Formmasse bezogen sind.

Der Glasfüller ist bevorzugt ausgewählt aus der Gruppe bestehend aus Glasfasern, gemahlenen Glasfasern, Glaspartikeln, Glas-Flakes, Glas-Kugeln, Glas-Hohlkugeln oder aus Kombinationen aus den vorgenannten. Kombinationen von Füllern werden bevorzugt nur dann eingesetzt, wenn die Brechungsindices zwischen den Füllergattungen nicht abweichen. Der mindestens eine Glasfüller weist dabei einen Brechungsindex, gemessen bei einer Wellenlänge von 589 nm, von 1,540 bis 1,600, bevorzugt von 1,545 bis 1,590, insbesondere von 1,548 bis 1,585 oder von 1,550 bis 1,570, auf.

Werden als Glasfüller (B) Glaskugeln oder Glaspartikel ausgewählt, beträgt deren mittlerer Durchmesser 0,3 bis 100 µm, bevorzugt 0,7 bis 30 µm, besonders bevorzugt 1 bis 10 µm.

Eine bevorzugte Ausführungsform der vorliegenden Erfindung sieht vor, dass die die Glassorte des mindestens einen Glasfüllers (B) ausgewählt ist aus der Gruppe bestehend aus E-Glas, ECR-Glas, R-Glas, AR-Glas, insbesondere E-Glas, R-Glas, sowie Mischungen von Glas mit im Wesentlichen gleichem Brechungsindex.

Eine bevorzugte Ausführungsform sieht vor, dass Komponente (B) sich wie folgt zusammensetzt: 50 bis 78 Gew.-%, insbesondere 52 bis 62 Gew.-% Siliciumdioxid, 0 bis 30 Gew.-%, insbesondere 8 bis 28 Gew.-% Aluminiumoxid, 1 bis 25 Gew.-%, insbesondere 8 bis 25 Gew.-% Calciumoxid, 0 bis 7 Gew.-% Magnesiumoxid, 0 bis 20 Gew.-%, insbesondere 0 bis 3 Gew.-% Natrium- und Kaliumoxid, 0 bis 10 Gew.-% Boroxid, 0 bis 20 Gew.-%, insbesondere 0 bis 5 Gew.-% weitere Zusätze, wie z.B. Metalloxide (z.B. Lithium-, Titan-, Zink-, Zirkon-, Eisenoxid).

Bevorzugte Glasfüller sind gemäß der vorliegenden Erfindung Glasfasern.

Gemäß einer bevorzugten Ausführungsform enthält Komponente (B) E-Glasfasern und besteht besonders bevorzugt aus diesen. E-Glasfasern bestehen gemäß ASTM D578-00 aus 52 bis 62 % Siliciumdioxid, 12 bis 16 % Aluminiumoxid, 16 bis 25 % Calciumoxid, 0 bis 10 % Boroxid, 0 bis 5 % Magnesiumoxid, 0 bis 2 % Alkalioxide, 0 bis 1,5 % Titandioxid und 0 bis 0,3 % Eisenoxid. E-Glasfasern haben eine Dichte von 2,54 bis 2,62 g/cm³, einen Zug-E-Modul von 70 bis 75 GPa, eine Zugfestigkeit von 3000 bis 3500 MPa und eine Reißdehnung von 4,5 bis 4,8 %, wobei die mechanischen Eigenschaften an Einzelfasern mit einem Durchmesser von 10 µm und eine Länge von 12,7 mm bei 23°C und einer relativen Luftfeuchte von 50 % bestimmt wurden.

Konkrete Beispiele für diese E-Glasfasern sind CSG3 von Nittobo, Glasfaser ECS der Firma CPIC, oder Vetrotex 995 der Saint-Gobain Gruppe.

Nach einer anderen bevorzugte Ausführungsform enthält Komponente (B) ECR-Glasfasern oder besteht besonders bevorzugt aus diesen. ECR-Glasfasern bestehen aus 52 bis 64 Gew.-%, insbesondere bevorzugt 54 bis 62 Gew.-% Siliciumdioxid, 8 bis 18 Gew.-%, insbesondere bevorzugt 9 bis 15 Gew.-% Aluminiumoxid, 15 bis 28 Gew.-%, insbesondere bevorzugt 17 bis 25 Gew.-% Calciumoxid, 0 bis 4 Gew.-% Magnesiumoxid, 0 bis 2 Gew.-% Natrium- und Kaliumoxid, 0 bis 1 Gew.-% Boroxid, 0 bis 10 Gew.-%, insbesondere bevorzugt 0 bis 5 weitere Zusätze, wie z.B. Metalloxide (z.B. Titan-, Zink-, Eisenoxid).

Nach einer anderen bevorzugte Ausführungsform enthält Komponente (B) R-Glasfasern oder besteht besonders bevorzugt aus diesen. R-Glasfasern bestehen aus 52 bis 64 Gew.-%, insbesondere bevorzugt 54 bis 62 Gew.-% Siliciumdioxid, 8 bis 18 Gew.-%, insbesondere bevorzugt 9 bis 15 Gew.-% Aluminiumoxid, 15 bis 28 Gew.-%, insbesondere bevorzugt 17 bis 25 Gew.-% Calciumoxid, 0 bis 4 Gew.-% Magnesiumoxid, 0 bis 2 Gew.-% Natrium- und Kaliumoxid, 0 bis 1 Gew.-% Boroxid, 0 bis 10 Gew.-%, insbesondere bevorzugt 0 bis 5 weitere Zusätze, wie z.B. Metalloxide (z.B. Titan-, Zink-, Eisenoxid).

Weiterhin ist es bevorzugt, dass Komponente (B) aus einer Mischung aus E-, ECR-, AR- und R-Glasfasern gebildet wird.

Besonders bevorzugt ist Komponente (B) eine Glasfaser, die im Wesentlichen aus den Komponenten Siliciumdioxid, Calciumoxid und Aluminiumoxid aufgebaut ist oder besteht und das Gewichtsverhältnis SiO₂/(CaO+MgO) kleiner 2,7, bevorzugt kleiner 2,5 und insbesondere zwischen 2,1 und 2,4 ist.

Die Glasfasern haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5 bis 20 µm, bevorzugt im Bereich von 6 bis 17 µm und besonders bevorzugt im Bereich von 6 bis 13 µm. Sie werden bevorzugt als Kurzglasfaser (Schnittglas mit einer Länge von 0,2 bis 20 mm, bevorzugt 2 bis 12 mm) oder Endlosfasern (Rovings) eingesetzt.

Bei flachen Glasfasern, also Glasfasern mit nicht-kreisförmiger Querschnittsfläche, werden solche mit einem Abmessungsverhältnis von der Hauptquerschnittsachse zur senkrecht darauf stehenden Nebenquerschnittsachse von mehr als 2, bevorzugt von 2 bis 8, insbesondere von 2,5 bis 5,0 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf.

Ein weiteres Merkmal der bevorzugten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70 %, bevorzugt mindestens 80 % und insbesondere bevorzugt zu mindestens 85 % aus.

Die Glasfasern sind bevorzugtermaßen mit einer insbesondere für Polyamid geeigneten Schlichte, beispielsweise enthaltend einen Haftvermittler auf Basis einer Amino- oder Epoxysilanverbindung, versehen.

Die Glasfasern der Komponente (B) können in Form von Kurzfasern, bevorzugt in Form von Schnittglas mit einer Länge im Bereich von 0,2 bis 20 mm, oder in Form von Endlosfasern vorliegen.

Gemäß einer Ausführungsform enthalten die Polyamid-Formmassen 5 bis 50 Gew.-% einer Glasfaser (B), die in Form von sogenannten Kurzfasern (z.B. Schnittglas mit einer Länge von 0,2 bis 20 mm) oder Endlosfasern (Rovings) verwendet wird, wobei die Glasfaser (B) sogenannte E-Glasfasern mit rundem Querschnitt sind.

### Komponente (C)

Die erfindungsgemäße Polyamid-Formmasse weist weiterhin von 0 bis 10 Gew.-% der Komponente (C), bezogen auf die Summe der Komponenten (A) bis (C), auf.

Nach einer bevorzugten Ausführungsform der vorliegenden Erfindung ist der Anteil von Komponente (C) in der Polyamid-Formmasse im Bereich von 0 bis 6 Gew.-%, bevorzugt 0,1 bis 5 Gew.-% und besonders bevorzugt 0,1 bis 3,0 Gew.%, bezogen auf die Summe der Komponenten (A) bis (C).

Eine weitere bevorzugte Ausführungsform sieht vor, dass der mindestens eine Zusatzstoff (C) ausgewählt ist aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern, Monomeren, insbesondere Lactamen, Weichmachern,

Schlagzähmodifikatoren, Gleitmitteln, Farbstoffen, Markierungsmitteln, photochromen Agenzien, Entformungsmitteln, Kondensationskatalysatoren, Kettenreglern, insbesondere monofunktionelle Carbonsäuren oder Aminen, Entschäumern, Antiblockmitteln, optischen Aufhellern, halogenfreien Flammschutzmitteln, natürlichen Schichtsilikaten, synthetischen Schichtsilikaten, nanoskaligen Füllstoffen mit einer Partikelgröße (*d*₉₀) von maximal 100 nm und Mischungen davon.

Insbesondere muss dem Einsatz von Zusatzstoffen der Komponente (C) hohe Beachtung hinsichtlich dem Erhalt einer möglichst hohen Transparenz und einem möglichst geringem Haze geschenkt werden. Es dürfen bevorzugt nur solche Zusatzstoffe in die Formmasse eingebracht werden, die keine oder nur geringe negative Auswirkungen auf die Transmission und den Haze der Formmasse ausüben. Daher enthält die erfindungsgemäße Formmasse bevorzugt nur die folgenden Komponenten (C), ausgewählt aus der Gruppe bestehend aus anorganischen und organischen Stabilisatoren, insbesondere Antioxidantien, Antiozonantien, Hitzestabilisatoren, Lichtschutzmitteln, UV-Stabilisatoren, UV-Absorbern oder UV-Blockern, Monomeren, Gleitmitteln, Farbstoffen, Markierungsmitteln, Entformungsmitteln, Kondensationskatalysatoren, Kettenreglern, insbesondere monofunktionelle Carbonsäuren oder Aminen, Entschäumern, Antiblockmitteln, optischen Aufhellern, in einer Menge von bevorzugt 0,1 bis 3,0 Gew.%, bezogen auf die Summe der Komponenten (A) bis (C).

### Polyamid-Formmasse

Eine bevorzugte Ausführungsform der vorliegenden Erfindung sieht vor, dass der Anteil von Komponente (A) in der Polyamid-Formmasse im Bereich von 49 bis 90 Gew.-%, bevorzugt 50 bis 90 Gew.-%, insbesondere bevorzugt 55 bis 89,9 Gew.-% und besonders bevorzugt 67 bis 84,9 Gew.%, bezogen auf die Summe der Komponenten (A) bis (C), liegt, und der Anteil von Komponente (B) in der Polyamid-Formmasse im Bereich von 10 bis 45 Gew.-%, bevorzugt 10 bis 40 Gew.-% und besonders bevorzugt 15 bis 30 Gew.%, bezogen auf die Summe der Komponenten (A) bis (C), liegt, und der Anteil von Komponente (C) in der Formmasse im Bereich von 0 bis 6 Gew.-%, bevorzugt 0,1 bis 5 Gew.-% und besonders bevorzugt 0,1 bis 3,0 Gew.%, bezogen auf die Summe der Komponenten (A) bis (C), liegt.

Weiterhin sieht eine andere bevorzugte Ausführungsform der vorliegenden Erfindung vor, dass die Polyamid-Formmasse keine anderen Bestandteile als die Komponenten (A) bis (C) enthält.

Nach einer anderen bevorzugten Ausführungsform der vorliegenden Erfindung beträgt die an einem aus der Polyamid-Formmasse hergestellten Formkörper (Platte mit der Dimension 60 × 60 × 2 mm) nach ASTM D1003 gemessene Transparenz mindestens 80 %, bevorzugt mindestens 83 % und besonders bevorzugt mindestens 85 %.

Nach einer anderen bevorzugten Ausführungsform der vorliegenden Erfindung beträgt die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) nach ASTM D1003 gemessene Transparenz mindestens 83 %, bevorzugt mindestens 85 % und besonders bevorzugt mindestens 87 %.

Eine weitere bevorzugte Ausführungsform sieht vor, dass der an einem aus der Polyamid-Formmasse hergestellten Formkörper (Platte mit der Dimension 60 × 60 × 2 mm) nach ASTM D1003 gemessene Haze maximal 40 %, bevorzugt maximal 35 %, besonders bevorzugt maximal 30 % und ganz besonders bevorzugt maximal 25 % beträgt.

Eine weitere bevorzugte Ausführungsform sieht vor, dass der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) nach ASTM D1003 gemessene Haze maximal 30 %, bevorzugt maximal 25 %, besonders bevorzugt maximal 20 % und ganz besonders bevorzugt maximal 15 % beträgt.

Gemäß einer anderen bevorzugten Ausführungsform vorliegender Erfindung beträgt der an einem aus der Polyamid-Formmasse hergestellten Formkörper (Platte mit der Dimension 60 × 60 × 2 mm) und nach DIN EN ISO 4287 (2010-07) mittels einer MarSurf XR1 Surface Measuring Station bestimmte arithmetische Mittenrauwert Ra höchstens 0,12 µm, bevorzugt höchstens 0,09 µm, besonders bevorzugt von 0,01 bis 0,10 µm, insbesondere von 0,02 bis 0,09 µm, und/oder die Rautiefe R_{z} höchstens 1,50 µm, bevorzugt höchstens 1,00 µm, besonders bevorzugt von 0,05 bis 1,30 µm, insbesondere von 0,10 bis 1,00 µm.

Gemäß einer anderen bevorzugten Ausführungsform vorliegender Erfindung beträgt der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) und nach DIN EN ISO 4287 (2010-07) mittels einer MarSurf XR1 Surface Measuring Station bestimmte arithmetische Mittenrauwert Ra höchstens 0,10 µm, bevorzugt höchstens 0,07 µm,besonders bevorzugt von 0,01 bis 0,08 µm, insbesondere von 0,02 bis 0,07 µm, und/oder die Rautiefe R_{z} höchstens 1,30 µm, bevorzugt höchstens 0,90 µm, besonders bevorzugt von 0,05 bis 1,00 µm, insbesondere von 0,10 bis 0,90 µm.

Nach einer weiteren bevorzugten Ausführungsform der vorliegenden Erfindung beträgt die an einem aus der Polyamid-Formmasse hergestellten Formkörper (Platte mit der Dimension 60 × 60 × 2 mm) nach ASTM D1003 gemessene Transparenz mindestens 80 %, bevorzugt mindestens 83 % und besonders bevorzugt mindestens 85 % und der an einem aus der Polyamid-Formmasse hergestellten Formkörper (Platte mit der Dimension 60 × 60 × 2 mm) nach ASTM D1003 gemessene Haze maximal 40 %, bevorzugt maximal 35 %, besonders bevorzugt maximal 30 % und ganz besonders bevorzugt maximal 25 % und die an einem aus der Polyamid-Formmasse hergestellten Formkörper (Platte mit der Dimension 60 × 60 × 2 mm) und nach DIN EN ISO 4287 (2010-07) mittels einer MarSurf XR1 Surface Measuring Station bestimmte arithmetische Mittenrauwert Ra höchstens 0,12 µm, bevorzugt höchstens 0,09 µm, besonders bevorzugt von 0,01 bis 0,10 µm, insbesondere von 0,02 bis 0,09 µm, und/oder bestimmte Rautiefe R_{z} höchstens 1,50 µm, bevorzugt höchstens 1,00 µm,besonders bevorzugt von 0,05 bis 1,30 µm, insbesondere von 0,10 bis 1,00 µm.

Nach einer weiteren bevorzugten Ausführungsform der vorliegenden Erfindung beträgt die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) nach ASTM D1003 gemessene Transparenz mindestens 83 %, bevorzugt mindestens 85 % und besonders bevorzugt mindestens 87 % und der an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) nach ASTM D1003 gemessene Haze maximal 30 %, bevorzugt maximal 25 %, besonders bevorzugt maximal 20 % und ganz besonders bevorzugt maximal 15 % und die an einem aus der Polyamid-Formmasse, enthaltend 20 Gew.-% Glasfüller (B), bevorzugt in Form von Glasfasern, insbesondere in Form von E-Glasfasern, hergestellten Formkörper (Platte mit der Dimension 60 × 60 × 2 mm) und nach DIN EN ISO 4287 (2010-07) mittels einer MarSurf XR1 Surface Measuring Station bestimmte arithmetische Mittenrauwert Ra höchstens 0,10 µm, bevorzugt höchstens 0,07 µm,besonders bevorzugt von 0,01 bis 0,08 µm, insbesondere von 0,02 bis 0,07 µm, und/oder bestimmte Rautiefe R_{z} höchstens 1,30 µm, bevorzugt höchstens 0,90 µm,besonders bevorzugt von 0,05 bis 1,00 µm, insbesondere von 0,10 bis 0,90 µm.

Eine andere bevorzugte Ausführungsform der vorliegenden Erfindung sieht vor, dass der gemäß ISO 527 bestimmte Zug-E-Modul der Polyamid-Formmasse im Bereich von 3'000 bis 18'000 MPa, bevorzugt von 5'000 bis 12'000 MPa und besonders bevorzugt von 6'000 bis 10'000 MPa liegt.

Nach einer anderen bevorzugten Ausführungsform der vorliegenden Erfindung beträgt die gemäß ISO 527 bestimmte Bruchspannung der Polyamid-Formmasse von 100 bis 270 MPa, bevorzugt von 120 bis 150 MPa und besonders bevorzugt von 130 bis 180 MPa.

Gemäß einer weiteren bevorzugten Ausführungsform der vorliegenden Erfindung ist die gemäß ISO 527 bestimmte Bruchdehnung der Polyamid-Formmasse grösser 2 %, bevorzugt grösser 2,3 % und besonders bevorzugt im Bereich von 2,4 bis 10 %.

Nach einer anderen bevorzugten Ausführungsform der vorliegenden Erfindung beträgt die gemäß ISO179/2 bestimmte Schlagzähigkeit der Polyamid-Formmasse grösser 30 kJ/mm², bevorzugt grösser 35 kJ/mm² und besonders bevorzugt von 35 bis 100 kJ/mm².

Gemäß einer weiteren bevorzugten Ausführungsform der vorliegenden Erfindung beträgt die gemäß ISO 179/2 bestimmte Kerbschlagzähigkeit der Polyamid-Formmasse wenigstens 6 kJ/mm², bevorzugt wenigstens 7 kJ/mm² und besonders bevorzugt von 7 bis 15 kJ/mm².

Nach einer anderen bevorzugten Ausführungsform der vorliegenden Erfindung beträgt die nach ISO 75 (2013-04) bestimmte HDT Ader Polyamid-Formmassen von mindestens 180°C, besonders bevorzugt mindestens 200°C und ganz besonders bevorzugt mindestens 220°C und liegt bevorzugt im Bereich von 180 und 300°C, besonders bevorzugt von 200 bis 280°C und ganz besonders bevorzugt von 220 bis 270°C.

Gemäß einer weiteren bevorzugten Ausführungsform der vorliegenden Erfindung beträgt die nach ISO 75 (2013-04) bestimmte HDT B der Polyamid-Formmassen mindestens 180°C, besonders bevorzugt mindestens 200°C und ganz besonders bevorzugt mindestens 220°C und liegt bevorzugt im Bereich von 180 und 300°C, besonders bevorzugt von 200 bis 280°C und ganz besonders bevorzugt von 220 bis 270°C.

Nach einer anderen bevorzugten Ausführungsform der vorliegenden Erfindung ist die Polyamid-Formmasse frei von Lactamen und Aminocarbonsäuren, insbesondere frei von Aminoundecansäure. Weiterhin ist es bevorzugt, dass die Polyamid-Formmasse frei ist von Polyetheramiden.

Eine bevorzugte Polyamid-Formmasse gemäß vorliegender Erfindung besteht besonders bevorzugt aus:
(A) 67 bis 84,9 Gew.-% einer Mischung (A) aus
   48 bis 63 % Polyamid 66 (A1);
   37 bis 52 % mindestens eines amorphen, teilaromatischen Polyamids (A2) mit 35 bis 80 Mol-% an aromatischen Dicarbonsäuren, insbesondere Terephthalsäure und/oder Isophthalsäure, bezogen auf die Gesamtmenge an Diaminen und Dicarbonsäuren im Polyamid (A2);
(B) 15 bis 30 Gew.-% mindestens einer Glasfaser mit Brechungsindex im Bereich von 1,55 bis 1,57;
(C) 0,1 bis 3 Gew.-% mindestens eines Zusatzstoffs,
wobei die folgenden Maßgaben zu erfüllen sind:
- Die Gewichtsanteile der Komponenten (A) bis (C) ergänzen sich auf 100 Gew.-%.
- Die Gewichtsanteile der Komponenten (A1) und (A2) ergänzen sich auf 100 Gew.-% der Komponente (A).
- Das amorphe Polyamid (A2) weist eine Transpararenz von mindestens 90 % und einen Haze von höchstens 3% auf.

### Formkörper

Die vorliegende Erfindung betrifft weiterhin Formkörper umfassend die Formmasse wie oben definiert, bevorzugt besteht der Formkörper aus dieser Polyamid-Formmasse. Diese Formkörper sind insbesondere ausgewählt aus der Gruppe bestehend aus dekorative Strukturrahmen, Bedienungknöpfen, Abdeckungen, Sichtflächen, hinterleuchtete Komponenten, Blenden von Mobiltelefonen, Tablets, Gehäuse von elektronischen Geräten, Dekorteilen in Fahrzeugen, Haushaltsgeräten, Behältern, Fahrzeugschlüsseln, Freizeit- und Outdoorartikeln.

Gemäß einer bevorzugten Ausführungsform der vorliegenden Erfindung sind die Formkörper mehrschichtig. Insbesondere handelt es sich um einen zwei-oder dreischichtigen Formkörper, der bevorzugt nur eine Schicht gebildet aus der zuvor beschriebenen erfindungsgemäßen Formmasse enthält.

Bevorzugtermassen handelt es sich um einen mehrschichtigen Formkörper gebildet aus einer Schicht (S1), enthaltend oder bestehend aus der erfindungsgemäßen Polyamid-Formmasse, und mindestens einer weiteren Schicht (S2), (S3) oder (S4), die frei von Glasfüller (B) ist oder die einen im Vergleich zur Schicht (S1) reduzierten Anteil an Glasfüller (B) aufweist, wobei der Glasfülleranteil bevorzugt um wenigstens 50 Gew.-% reduziert.

Diese mehrschichtigen Formkörper ermöglichen eine gute Oberflächenqualität auch bei Verwendung von höherviskosen, transparenten Polyamiden als Bestandteil der Mischung (A) und/oder die Verwendung von Formmassen mit höherem Füllgrad an Glasfüller (B) in der Schicht (S1). Zudem übt die Werkzeugoberfläche einen geringeren Einfluss auf die Oberflächenqualität aus, so dass auch bei nicht gerade optimalen Werkzeugoberflächen dennoch eine gute Oberflächengüte realisiert werden kann. Dies reduziert die Oberflächenrauhigkeit und den Haze des Formkörpers und erhöht dessen Transparenz. Des Weiteren kann beispielsweise eine hochbeständige Schicht (S2), (S3) oder (S4) dem Mehrschichtformkörper eine insgesamt bessere chemische Beständigkeit verleihen, weil die möglicherweise weniger beständige Schicht (S1) nicht in direktem Kontakt zu den Chemikalien steht. In diesem Zusammenhang kann bei geeigneter Auswahl der außen liegenden Schichten (S2) bis (S4) ein Mehrschichtformkörper mit guter Spannungsrissbeständigkeit erhalten werden. Somit können die Beständigkeit gegenüber Medien sowie die Transparenz und der Haze gesteigert werden, ohne große Einbußen bei den mechanischen Eigenschaften zu erleiden.

Nach einer anderen bevorzugten Ausführungsform weist der Formkörper einen arithmetischen Mittenrauwert Ra von höchstens 0,1 µm, bevorzugt von 0,01 bis 0,08 µm, insbesondere von 0,02 bis 0,06 µm, und/oder eine Rautiefe R_{z} von höchstens 1,5 µm, bevorzugt von 0,05 bis 1,0 µm, insbesondere von 0,1 bis 0,9 µm, jeweils bestimmt nach DIN EN ISO 4287 (2010-07) mittels einer MarSurf XR1 Surface Measuring Station, auf.

Nach einer weiteren bevorzugten Ausführungsform der vorliegenden Erfindung beträgt die an einem aus der Polyamid-Formmasse hergestellten mehrschichtigen Formkörper, enthaltend in der Schicht (S1) 20 Gew.-% Glasfüller (B), bevorzugt in Form von Glasfasern, insbesondere in Form von E-Glasfasern, hergestellten Formkörper (Platte mit der Dimension 60 × 60 × 2 mm) nach ASTM D1003 gemessene Transparenz mindestens 80 %, bevorzugt mindestens 83 % und besonders bevorzugt mindestens 85 % und der nach ASTM D1003 gemessene Haze maximal 40 %, bevorzugt maximal 35 %, besonders bevorzugt maximal 30 % und ganz besonders bevorzugt maximal 25 %.

Bevorzugte Schichtabfolgen sind (S1)/(S2) oder (S2)/(S1)/(S2) oder (S3/(S1)/(S4). Dabei werden die Schichten von oben nach unten angeben, d.h. (S1)/(S2) meint beispielsweise, dass (S1) die oberste Schicht und (S2) die unterste Schicht des Formkörpers bildet.

Nach einer weiteren bevorzugten Ausführungsform der vorliegenden Erfindung weist der Formkörper die Schichten (S2), (S3) oder (S4) auf, die auf der Polyamid-Mischung (A) oder auf Polyamid (A1) oder auf Polyamid (A2) oder auf einem zu (A1) und (A2) unterschiedlichen Polyamid basieren und bevorzugt aus diesen bestehen. Der Begriff basieren ist im Sinne vorliegender Anmeldung so auszulegen, dass die Schicht zu mindestens 50 %, bevorzugt zu mindestens 70 % und besonders bevorzugt zu mindestens 90 % aus dieser Schicht besteht.

Eine andere bevorzugte Ausführungsform der vorliegenden Erfindung sieht vor, dass die mittlere Schichtdicke der Schicht (S1) wenigstens 2, bevorzugt wenigstens 5 und besonders bevorzugt wenigstens 9 mal grösser ist als die Summe aller mittleren Schichtdicken der Schichten (S2), (S3) oder (S4).

Nach einer anderen bevorzugten Ausführungsform der vorliegenden Erfindung ist der Gewichtsanteil der Schicht (S1) im Formkörper wenigstens 2, bevorzugt wenigstens 5 und besonders bevorzugt wenigstens 10 mal grösser als der Gewichtsanteil aller Schichten (S2), (S3) und (S4) im Formkörper.

Gemäß einer weiteren bevorzugten Ausführungsform vorliegender Erfindung basieren die Schichten (S2), (S3) oder (S4) auf einem Polyamid ausgewählt aus der Gruppe bestehend aus PA MACM12, PA MACMI/MACMT/12, PA 11, PA 12 und Mischungen hiervon bzw. besteht bevorzugt aus diesen.

Nach einer anderen Ausführungsform vorliegender Erfindung wird die Schicht (S2), (S3) oder (S4) mit der Schicht (S1) hinterspritzt oder die Schichten (S1) und (S2), (S3) oder (S4) wurden durch Zwei- oder Mehrkomponenten-Spritzguss (Mono-Sandwich-Verfahren) erzeugt, wobei der mehrschichtige Formkörper integral in einem Spritzgusszyklus gefertigt wird.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet:

### Oberflächenrauheit, Rₐ, R_{z}

Die Rauheit der Prüfkörper wurde gemäß der DIN EN ISO 4287 (2010-07) mit einem MarSurf XR1 Surface Measuring Station der Firma Mahr GmbH (DE) gemessen. Die Rauheitswerte, nämlich der arithmetische Mittenrauwert Ra und die Rautiefe R_{z}, werden in Mikrometern (µm) angegeben.

### Haze, Transparenz

Transparenz und Haze wurden nach ASTM D1003 auf einem Messgerät Haze Gard Plus der Firma BYK Gardner an 2 mm dicken Platten (60 mm × 60 mm Oberfläche) mit CIE Lichtart C bei 23 °C gemessen. Die Oberfläche des Prüflings (Platte 60 × 60 × 2 mm) verfügte über einen arithmetischen Mittenrauwert Rₐ und eine Rautiefe R_{z} wie für die Formmassen gemäß der Beispiele und Vergleichsbeispiele in Tabelle 2 oder für den Mehrschichtformkörper explizit angegeben. Die Herstellung der Prüfkörper wird unter Punkt 3.3 beschrieben.

### Schmelzpunkt (Tₘ) und Schmelzenthalpie (ΔHₘ)

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, T_{g}

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunk des Glasübergangbereichs, welcher als Glasübergangstemperatur angegeben wurde, wurde nach der Methode "Half Height" ermittelt.

### Relative Viskosität, ηᵣₑₗ

Die relative Viskosität wurde gemäß ISO 307 (2007) bei 20°C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Zup, E-Modul

Die Bestimmung des Zug-E-Moduls und der Zugfestigkeit wurde gemäß ISO 527 (2012) bei 23°C mit einer Zuggeschwindigkeit von 1 mm/min an einem ISO-Zugstab (Typ A1, Masse 170 × 20/10 × 4) hergestellt gemäß der Norm: ISO/CD 3167 (2003), durchgeführt.

### Bruchspannung und Bruchdehnung

Die Bestimmung von Bruchspannung und Bruchdehnung wurden gemäß ISO 527 (2012) bei 23°C mit einer Zuggeschwindigkeit von 5 mm/min an einem ISO-Zugstab, Typ A1 (Masse 170 × 20/10 × 4 mm), hergestellt gemäß der Norm ISO/CD 3167 (2003), durchgeführt.

### Schlagzähigkeit nach Charpy

Die Bestimmung der Schlagzähigkeit nach Charpy wurde gemäß ISO 179/2*eU (1997, * 2 = instrumentiert) bei 23°C an einem ISO-Prüfstab, Typ B1 (Masse 80 × 10 × 4 mm), hergestellt gemäß der Norm ISO/CD 3167 (2003), durchgeführt.

### Kerbschlagzähigkeit nach Charpy

Die Bestimmung der Kerbschlagzähigkeit nach Charpy wurde gemäß ISO 179/2*eA (1997, * 2 = instrumentiert) bei 23°C an einem ISO-Prüfstab, Typ B1 (Masse 80 × 10 × 4 mm), hergestellt gemäß der Norm ISO/CD 3167 (2003), durchgeführt.

### Wärmeformbeständigkeitstemperatur (HDT)

Die Wärmeformbeständigkeitstemperatur oder auch Verformungstemperatur unter Belastung genannt (HDT, nach englischem "heat deflection temperature") wird als HDT/A und/oder HDT/B berichtet. HDT/A entspricht dem Verfahren A mit einer Biegespannung von 1,80 MPa und HDT/B entspricht dem Verfahren B mit einer Biegespannung von 0,45 MPa. Die HDT-Werte wurden gemäss ISO 75 (2013-04) an ISO-Schlagstäben der Dimension 80 × 10 × 4 mm bestimmt.

### Messung des Brechungsindexes von Glasfasern

Die Bestimmung des Brechungsindex von Glasfasern und von Polyamid (A1) erfolgte mit der Methode der Beckeschen Linie und unter Verwendung von Immersionsflüssigkeiten bezogen auf 589 nm in Anlehnung an Methode B der ISO 489 (1999-04).

### Messung des Brechungsindex von Polyamiden

Der Brechungsindex von Polyamide (A2) wurde nach ISO 489 (1999-04) an 2 mm dicken Platten (60×60×2 mm) bei einer Wellenlänge von 589 nm und einer Temperatur von 23 °C mittels eines Abbe-Refraktometers der Firma Carl Zeiss (Methode A) bestimmt. Zwischen der untersuchten Platte und der Prismenfläche wurde als Kontaktflüssigkeit 1-Bromnaphthalin aufgetragen.

### 2 Ausgangsmaterialien

Die in den Beispielen und Vergleichsbeispielen verwendeten Materialien werden in Tabelle 1 zusammengefasst.

**Tabelle 1: In den Beispielen und Vergleichsbeispielen verwendete Materialien.**

| Komponenten | Beschreibung | Hersteller |
|---|---|---|
| PA66 | PA 66 (Radipol^{®} A45) | RadiciGroup |
| Komponente (A1) | rel. Viskosität = 1.85 | |
| | Brechungsindex: 1,5360 | |
| | Transparenz: 59 %; Haze: 100 %; Tm: 260 °C | |
| Polyamid 1 | PA 6I/MACMI/6T/MACMT (77/13/8/2) | EMS-CHEMIE AG |
| | rel. Viskosität = 1.42 | (Schweiz) |
| Komponente (A2) | aromatische Struktureinheiten: 50 Mol-% | |
| | Brechungsindex: 1,582 | |
| | Transparenz: 93 %; Haze: 0.5 %; Tg: 147 °C | |
| Polyamid 2 | PA 6I/6T/MACMI/MACMT/PACMI/PACMT/12 (39/39/7.1/7.1/2.5/2.5/2.8) | EMS-CHEMIE AG (Schweiz) |
| Komponente (A2) | rel. Viskosität = 1.62 | |
| | aromatische Struktureinheiten: 50 Mol-% | |
| | Brechungsindex: 1,583 | |
| | Transparenz: 93 %; Haze: 0.5 %; Tg: 159 °C | |
| Polyamid 3 | PA 6I/6T) (67/33) | EMS-CHEMIE AG |
| | rel. Viskosität = 1.54 | (Schweiz) |
| Komponente (A2) | aromatische Struktureinheiten: 50 Mol-% | |
| | Brechungsindex: 1,591 | |
| | Transparenz: 93 %; Haze: 0.6 %; Tg: 125 °C | |
| Glasfaser 1 | OC Micromax 771 | Owens Corning |
| | Brechungsindex: 1.556 | |
| Glasfaser 2 | ECS 301T-3 | CPIC (China) |
| | Brechungsindex: 1,556 | |

### 3 Beispiele und Vergleichsbeispiele

### 3.1 Herstellung der Polyamid-Formmassen

Generell werden zur Herstellung der Kunststoff-Formmasse die Komponenten auf üblichen Compoundiermaschinen, wie z.B. ein- oder zweiwelligen Extrudern oder Schneckenknetern, in der Polymerschmelze gemischt (compoundiert). Die Komponenten werden dabei einzeln in den Einzug dosiert oder in Form eines Dryblends zugeführt. Werden Zusatzstoffe (Additive) verwendet, können diese direkt oder in Form eines Masterbatches eingebracht werden. Bei einer Dryblend-Herstellung werden die getrockneten Polymer-Granulate und die Zusatzstoffe vermischt. Zur Vermeidung der Feuchtigkeitsaufnahme kann das Mischen unter getrocknetem Schutzgas erfolgen. Die eingesetzten Glasfasern werden über einen Sidefeeder im beabsichtigten Verhältnis in die Polymerschmelze dosiert und im Zylinder der Compoundiermaschine weiter homogenisiert. Die Dosierungen aller Komponenten in den Einzug bzw. Sidefeeder werden so über elektronisch gesteuerte Waagen eingestellt, dass die gewünschten Mengenverhältnisse Glas - Polymer daraus resultieren.

Die Compoundierung erfolgt bei eingestellten Extruder-Zylindertemperaturen von z.B. 230°C bis 350°C. Vor der Düse kann Vakuum angelegt oder atmosphärisch entgast werden. Die Schmelze wird in Strangform in ein Wasserbad ausgetragen und granuliert. Bevorzugt wird zum Granulieren eine Unterwassergranulierung oder eine Stranggranulierung verwendet.

Die somit bevorzugt in Granulatform erhaltene Kunststoff-Formmasse wird anschließend getrocknet und kann nachher durch Spritzguss zu Formkörpern weiterverarbeitet werden. Dies erfolgt über ein erneutes Aufschmelzen des trockenen Granulats in einem beheizbaren Zylinder, fördern der Schmelze in eine Spritzgussform, in der die Schmelze erstarren kann.

### 3.2 Herstellung der Polyamid-Formmasse gemäß Beispiel B1 bis B4 und VB1 bis VB3

Die Formmassen für die Beispiele B1 bis B4 sowie für die Vergleichsbeispiele VB1 bis VB3 wurden auf einem Zweiwellenextruder der Firma Werner & Pfleiderer Typ ZSK 25 hergestellt. Die Polyamide (A1) und (A2) wurden in den in Tabelle 2 angegebenen Mengenanteilen über Dosierwaagen in den Einzug des Extruders dosiert. Die eingesetzten Glasfasern wurden über einen Sidefeeder im beabsichtigten Verhältnis in die Polymerschmelze gefördert und im Zylinder der Compoundiermaschine weiter homogenisiert.

Die Temperatur des ersten Gehäuses wurde auf 80°C eingestellt, diejenige der restlichen Gehäuse aufsteigend von 270 bis 300°C. Es wurde eine Drehzahl von 200 U/min und ein Durchsatz von 12 kg/h verwendet und in der dritten Zone vor der Düse im Stickstoffstrom entgast. Die als Strang ausgetragene Polyamid-Formmasse wurde im Wasserbad abgekühlt, granuliert und das erhaltene Granulat bei 80°C im Vakuum bei 30 mbar auf einen Wassergehalt von unter 0,1 Gew.-% getrocknet.

### 3.3 Herstellung der Prüfkörper

Aus dem erhaltenen Granulat wurden Zugstäbe, Schlagstäbe und Platten als Probekörper gespritzt, an denen die in Tabelle 2 angegebenen Eigenschaften bestimmt wurden. Die Prüfkörper wurden auf einer Spritzgussmaschine der Firma Arburg, Modell Allrounder 420 C 1000-250 hergestellt. Dabei wurden aufsteigende Zylindertemperaturen von 270°C bis300 °C verwendet. Bei allen gespritzten Formkörpern betrug die Schmelzetemperatur jeweils 295 bis 305°C. Die Werkzeugtemperatur lag im Fall von Platten (2mm × 60 mm × 60 mm) jeweils bei 120 °C. Bei den Zug- und Schlagstäben lag die Werkzeugtemperatur bei jeweils 80 °C. Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel gelagert.

Im Fall von Platten (2mm × 60 mm × 60 mm) zur Bestimmung der optischen Eigenschaften wurden die Flächen der Kavität der Spritzgussform hochglanzpoliert, sodass die Formkörper (Platten) eine Hochglanzoberfläche mit einem arithmetischen Mittenrauwert Ra von 0,01 bis 0,08 µm, und/oder einer Rautiefe Rz von 0,05 bis 1,0 µm, nach DIN EN ISO 4287 erhielten.

### 3.4 Ergebnisse

**Tabelle 2: Beispiele und Vergleichsbeispiele.**

| **Komponenten** | **Einheit** | **B1** | **B2** | **B3** | **B4** | **VB1** | **VB2** | **VB3** |
|---|---|---|---|---|---|---|---|---|
| PA 66 | Gew.-% | 44 | 36 | 25 | 40 | - | - | |
| Komponente (A1) | | | | | | | | |
| Anteil (A1) in (A) | Gew.-% | 55 | 45 | 50 | 50 | - | - | |
| Polyamid 1 | Gew.-% | - | 44 | - | - | - | - | |
| Komponente (A2) | | | | | | | | |
| Polyamid 2 | Gew.-% | 36 | - | - | - | 80 | - | |
| Komponente (A2) | | | | | | | | |
| Polyamid 3 | Gew.-% | - | - | 25 | 40 | - | 80 | 50 |
| Komponente (A2) | | | | | | | | |
| Anteil (A2) in (A) | Gew.-% | 45 | 55 | 50 | 50 | - | - | |
| Glasfaser 1 | Gew.-% | - | - | - | 20 | - | - | |
| Glasfaser 2 | Gew.-% | 20 | 20 | 50 | | 20 | 20 | 50 |

| **Eigenschaften** | | | | | | | | |
|---|---|---|---|---|---|---|---|---|
| Haze der Formmasse | % | 13 | 13 | 33 | 15 | 91 | 97 | 100 |
| Transparenz der Formmasse | % | 85 | 88 | 83 | 91 | 86 | 81 | 79 |
| Ra | µm | 0,065 | 0,068 | 0,089 | 0,061 | 0,059 | 0,063 | 0,088 |
| Platte 60x60x2 mm | | | | | | | | |
| Rz | µm | 0,845 | 0,882 | 0,957 | 0,788 | 0,790 | 0,824 | 0,974 |
| Platte 60x60x2 mm | | | | | | | | |
| Zug-E-Modul | MPa | 7210 | 7340 | 17120 | 7360 | 6160 | 7740 | 16900 |
| Bruchspannung | MPa | 170 | 160 | 257 | 163 | 128 | 138 | 248 |
| Bruchdehnung | % | 3,2 | 2,7 | 2,4 | 3,7 | 3,0 | 2,4 | 1,8 |
| Schlagzähigkeit | kJ/mm² | 49 | 37 | 85 | 73 | 37 | 35 | 58 |
| Kerbschlagzähigkeit | kJ/mm² | 9,6 | 9,4 | 12 | 6,9 | 8,6 | 8,6 | 10 |
| H DT A | °C | 221 | 223 | 252 | 224 | 148 | 114 | 117 |
| HDT B | °C | 225 | 227 | 258 | 229 | 153 | 120 | 122 |

### Herstellung der Mehrschichtformkörper

Die folgenden Mehrschichtformkörper der Dimension 60 × 60 × 2 mm wurden durch Hinterspritzen von Folien aus unverstärktem, transparentem Polyamid mit der erfindungsgemäßen Polyamid-Formmasse hergestellt. Die Herstellung erfolgte auf einer Spritzgussmaschine der Firma Arburg, Modell 420C 1000-250 unter Anwendung der oben für die 60 × 60 × 2 mm Platten beschriebenen Bedingungen. Dazu wurden zwei extrudierte Folien aus dem Polyamid 2 (PA 6I/6T/MACMI/MACMT/PACMI/PACMT/12; Komponente (A2)), die je eine Dicke von 100 µm hatten, auf das Maß 60 × 60 × 0.1 mm zugeschnitten, in das Spritzgusswerkzeug eingelegt und nach Schließen des Werkzeuges die verbleibende Kavität zwischen die beiden Folien durch Einspritzen der erfindungsgemäßen Polyamid-Formmasse aus Beispiel B1 gefüllt. Nach Abkühlen wurde der Mehrschichtformkörper entformt und Transparenz und Haze gemäß ASTM D1003 bestimmt. Die Einlegefolien aus Polyamid 2 konnten nach dem Spritzgussvorgang nicht mehr vom Mehrschichtformkörper gelöst werden, sondern waren stoffschlüssig mit der Formmasse aus den Beispielen B1 verbunden.

| **Mehrschichtformkörper 1** | | |
|---|---|---|
| Aufbau des Mehrschichtformkörpers der Dimension 60 x 60 x 2 mm | Außen Mittig Innen | Folie aus Polyamid 2 (o) Formmasse aus Beispiel B1 Folie aus Polyamid 2 (u) |
| Transparenz | % | 89 |
| Haze | % | 11 |
| Ra (o/u) (Platte 60x60x2 mm) | µm | 0.026/0.027 |
| Rz (o/u) (Platte 60x60x2 mm) | µm | 0.314/0.355 |

### 4 Diskussion der Ergebnisse

Tabelle 2 kann entnommen werden, dass die erfindungsgemäßen Polyamid-Formmassen gemäß der Beispiele B1, B2 und B4 einen sehr geringen Haze von 13 bis 15 % und eine hohe Transparenz von 85 bis 91 % aufweisen. Selbst die mit 50 Gew.-% Glasfaser gefüllte Polyamid-Formmasse gemäß B3 zeigt noch einen Haze von 33 % und eine Transmission von 83.

Die Polyamid-Formmassen gemäß der Vergleichsbeispiele VB1 und VB2 zeigen dahingegen, trotz eines Anteils an Glasfaser von nur 20 Gew.-%, einen deutlich höheren Haze von 91 % bzw. 97 %. Der Vergleich der Formmasse gemäß B3 mit der gemäß VB3 verdeutlicht, dass auch für sehr hohe Anteile an Glasfüller, hier von 50 Gew.-%, ein signifikant besserer Haze erhalten wird.

Der Vergleich der erfindungsgemäßen Beispiele B1 bis B4 mit den Vergleichsbeispielen VB1 und VB2, die jeweils nur ein Polyamid (A2) enthalten, verdeutlicht, dass unbedingt eine Mischung aus den Polyamiden (A1) und (A2) notwendig ist, um gute Haze-Werte zu erreichen.

Überraschenderweise gelingt es also nur durch die spezielle Merkmalskombination gemäß Anspruch 1 mit einem Glasfüller verstärkte Polyamid-Formmassen bereitzustellen, die neben guten mechanischen Eigenschaften auch sehr gute optische Eigenschaften, insbesondere einen geringen Haze, aufweisen.

## Patentansprüche

1. Polyamid-Formmasse enthaltend die folgenden Komponenten oder bestehend aus diesen Komponenten:
(A) 40 bis 95 Gew.-% einer Polyamidmischung bestehend aus den Polyamiden (A1) und (A2), wobei
(A1) 42 bis 68 Gew.-% mindestens eines teilkristallinen Polyamids, ausgewählt aus der Gruppe bestehend aus PA 46, PA 66, PA 66/6, PA 610, PA 612, PA 614, PA 615, PA 616 und Mischungen daraus, ist; und
(A2) 32 bis 58 Gew.-% mindestens eines transparenten, teilaromatischen Polyamids mit zumindest 30 Mol-% an Monomeren mit aromatischen Struktureinheiten, bezogen auf die Gesamtmenge an Diaminen und Dicarbonsäuren im Polyamid (A2), ist, welches amorph oder mikrokristallin ist;
(B) 5 bis 50 Gew.-% mindestens eines Glasfüllers mit einem Brechungsindex, gemessen gemäß Methode B der ISO 489(1999-04) im Bereich von 1,540 bis 1,600;
(C) 0 bis 10 Gew.-% mindestens eines Zusatzstoffes;
wobei sich die Gewichtsanteile der Komponenten (A) bis (C) auf 100 Gew.-% und sich die Gewichtsanteile der Komponenten (A1) und (A2) auf 100 Gew.-% der Komponente (A) ergänzen;
wobei das mindestens eine transparente Polyamid (A2) eine Transparenz, gemessen an einem aus den Polyamiden (A2) hergestellten Formkörper (Platte mit der Dimension 60 × 60 × 2 mm) nach ASTM D1003 von mindestens 90 % und einen Haze, gemessen an einem aus den Polyamiden (A2) hergestellten Formkörper (Platte mit der Dimension 60 × 60 × 2 mm) nach ASTM D1003 von höchstens 3 % aufweist.

2. Polyamid-Formmasse nach Anspruch 1, **dadurch gekennzeichnet, dass** die Polyamidmischung (A) aus 45 bis 65 Gew.-% Polyamid (A1) und 35 bis 55 Gew.-% Polyamid (A2), besteht; und/oder
der Anteil von Komponente (A) in der Polyamid-Formmasse im Bereich von 49 bis 90 Gew.-%, bezogen auf die Summe der Komponenten (A) bis (C), und/oder
der Anteil von Komponente (B) in der Polyamid-Formmasse im Bereich von 10 bis 45 Gew.-%, bezogen auf die Summe der Komponenten (A) bis (C), liegt, und/oder
der Anteil von Komponente (C) in der Formmasse im Bereich von 0 bis 6 Gew.-%, bezogen auf die Summe der Komponenten (A) bis (C), liegt.

3. Polyamid-Formmasse nach einem der vorhergehenden Ansprüche, **dadurch gekennzeichnet, dass** Polyamid (A1) PA 66 ist.

4. Polyamid-Formmasse nach einem der vorhergehenden Ansprüche, **dadurch gekennzeichnet, dass** das mindestens eine transparente Polyamid (A2) mindestens 35 Mol-% an Monomeren mit aromatischen Struktureinheiten, bezogen auf die Gesamtmenge an Diaminen und Dicarbonsäuren, enthält.

5. Polyamid-Formmasse nach einem der vorhergehenden Ansprüche, **dadurch gekennzeichnet, dass** die Monomere mit aromatischen Struktureinheiten für das transparente Polyamid (A2) ausgewählt sind aus der Gruppe bestehend aus Terephthalsäure, Isophthalsäure, Naphthalindicarbonsäuren (NDA), Biphenyl-dicarbonsäuren, 1,5-Anthracendicarbonsäure, p-Terphenylen-4,4'-dicarbonsäure und 2,5-Pyridindicarbonsäure, Xylylendiaminen, und Mischungen davon.

6. Polyamid-Formmasse nach einem der vorhergehenden Ansprüche, **dadurch gekennzeichnet, dass** die transparenten Polyamide (A2) aus den folgenden Monomeren aufgebaut sind:
(a-A2) 0 bis 100 Mol-% an cycloaliphatischen Diaminen, bezogen auf die Gesamtmenge an Diaminen;
(b-A2) 0 bis 100 Mol-% an Diaminen mit aromatischen Struktureinheiten, bezogen auf die Gesamtmenge an Diaminen;
(c-A2) 0 bis 100 Mol-% an offenkettigen, aliphatischen Diamine, bezogen auf die Gesamtmenge an Diaminen;
(d-A2) 0 bis 70 Mol-% an offenkettigen, aliphatischen Dicarbonsäuren, bezogen auf die Gesamtmenge an Dicarbonsäuren;
(e-A2) 30 bis 100 Mol-% an aromatischen Dicarbonsäuren, bezogen auf die Gesamtmenge an Dicarbonsäuren;
(f-A2) 0 bis 70 Mol-% an cycloaliphatischen Dicarbonsäuren, bezogen auf die Gesamtmenge an Dicarbonsäuren;
(g-A2) 0 bis 40 Gew.-% an Lactamen und/oder Aminocarbonsäuren mit 6 bis12 Kohlenstoffatomen, bezogen auf die Gesamtmenge der Monomere (a-A2) bis (g-A2);
wobei die Summe der Diamine (a-A2), (b-A2) und (c-A2) 100 Mol-% ergibt;
wobei die Summe der Dicarbonsäuren (d-A2), (e-A2) und (f-A2) 100 Mol-% ergibt; und
wobei die Summe der Monomeren (b-A2) und (e-A2) mindestens 30 Mol-% bezogen auf die Summe der gesamten Diamine und der gesamten Dicarbonsäuren im Polyamid (A2) beträgt.

7. Polyamid-Formmasse nach Anspruch 5, **dadurch gekennzeichnet, dass** das cycloaliphatische Diamin (a-A2) ausgewählt ist aus der Gruppe bestehend aus Bis-(4-amino-3-methyl-cyclohexyl)-methan, Bis-(4-aminocyclohexyl)-methan, Bis-(4-amino-3-ethyl-cyclohexyl)-methan, Bis-(4-amino-3,5-dimethyl-cyclohexyl)-methan, 2,6-Norbornandiamin, 1,3-Diaminocyclohexan, 1,4-Diaminocyclohexan, Isophorondiamin, 1,3-Bis-(aminomethyl)cyclohexan, 1,4-Bis-(aminomethyl)cyclohexan, 2,2-(4,4'-Diaminodicyclohexyl)propan und Mischungen daraus;
das aromatische Diamin (b-A2) ausgewählt ist aus der Gruppe bestehend aus Xylylendiamin, und Mischungen daraus;
und/oder
das Diamin (c-A2) ausgewählt ist aus der Gruppe bestehend aus 1,4-Butandiamin, 1,5-Pentandiamin, 2-Methyl-1,5-pentandiamin, Hexandiamin, 2,2,4-Trimethyl-1,6-hexamethylendiamin, 2,4,4-Trimethyl-1,6-hexamethylendiamin, Nonandiamin, 2-Methyl-1,8-octandiamin, 1,10-Decandiamin, 1,11-Undecandiamin, 1,12-Dodecandiamin, 1,13-Tridecandiamin, 1,14-Tetradecandiamin, 1,18-Octadecandiamin, und Mischungen daraus;
und/oder
die aliphatische Dicarbonsäure (d-A2) ausgewählt ist aus der Gruppe bestehend aus 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus;
und/oder
die aromatische Dicarbonsäure (e-A2) ausgewählt ist aus der Gruppe bestehend aus Terephthalsäure, Isophthalsäure, Naphthalindicarbonsäuren (NDA), Biphenyl-dicarbonsäuren, 1,5-Anthracendicarbonsäure, p-Terphenylen-4,4"-dicarbonsäure und 2,5-Pyridindicarbonsäure und Mischungen davon;
und/oder
die cycloaliphatische Dicarbonsäure (f-A2) ausgewählt ist aus der Gruppe bestehend aus 1,3-Cyclopentandicarbonsäure, 1,3-Cyclohexandicarbonsäure, 1,4-Cyclohexandicarbonsäure, 2,3-Norbornandicarbonsäure, 2,6-Norbornandicarbonsäure und Mischungen daraus;
und/oder
das Lactam und/oder die α,ω-Aminocarbonsäuren (g-A1) und/oder (g-A2) ausgewählt ist aus der Gruppe bestehend aus m-Aminobenzoesäure, p-Aminobenzoesäure, Caprolactam (CL), α,ω-Aminocapronsäure, α,ω-Aminoheptansäure, α,ω-Aminoctansäure, α,ω-Aminononansäure, α,ω-Aminodecansäure, α,ω-Aminoundecansäure (AUA), Laurinlactam (LL) und α,ω-Aminododecansäure (ADA).

8. Polyamid-Formmasse nach einem der vorhergehenden Ansprüche, **dadurch gekennzeichnet, dass** die an einem aus der Polyamid-Formmasse hergestellten Formkörper (Platte mit der Dimension 60 × 60 × 2 mm) nach ASTM D1003 gemessene Transparenz mindestens 80 %, und/oder
der an einem aus der Polyamid-Formmasse hergestellten Formkörper (Platte mit der Dimension 60 × 60 × 2 mm) nach ASTM D1003 gemessene Haze beträgt maximal 40 %.

9. Polyamid-Formmasse nach einem der vorhergehenden Ansprüche, **dadurch gekennzeichnet, dass** das Polyamid (A2) ausgewählt ist aus der Gruppe bestehend aus PA 6I/6T, PA 10I/10T, PA DI/DT (D = 2-Methyl-1,5-pentandiamin), PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT und Mischungen hiervon.

10. Polyamid-Formmasse nach einem der vorhergehenden Ansprüche, **dadurch gekennzeichnet, dass** der mindestens eine Glasfüller (B) ausgewählt ist aus der Gruppe bestehend aus Glasfasern, gemahlenen Glasfasern, Glaspartikeln, Glas-Flakes, Glas-Kugeln, Glas-Hohlkugeln und Kombinationen hiervon, wobei der mindestens eine Glasfüller einen Brechungsindex, gemessen bei einer Wellenlänge von 589 nm, von 1,545 bis 1,590 aufweist.

11. Polyamid-Formmasse nach einem der vorhergehenden Ansprüche, **dadurch gekennzeichnet, dass**
die Glassorte des mindestens einen Glasfüllers (B) ausgewählt ist aus der Gruppe bestehend aus E-Glas, ECR-Glas, R-Glas und AR-Glas.

12. Polyamid-Formmasse nach einem der vorhergehenden Ansprüche, **dadurch gekennzeichnet, dass** der mindestens eine Zusatzstoff (C) ausgewählt ist aus der Gruppe bestehend aus anorganischen und organischen Stabilisatoren, Monomeren, Schlagzähmodifikatoren, Gleitmitteln, Farbstoffen, Markierungsmitteln, photochromen Agenzien, Entformungsmitteln, Kondensationskatalysatoren, Kettenreglern, Entschäumern, Antiblockmitteln, optischen Aufhellern, halogenfreien Flammschutzmitteln, natürlichen Schichtsilikaten, synthetischen Schichtsilikaten, nanoskaligen Füllstoffen mit einer Partikelgrösse (*d*₉₀) von maximal 100 nm und Mischungen davon.

13. Polyamid-Formmasse nach einem der vorhergehenden Ansprüche, **dadurch gekennzeichnet, dass** die Komponente (A2) eine nach ISO 11357-2 bestimmte Glasübergangstemperatur von mindestens 120°C, aufweist.

14. Formkörper enthaltend eine Polyamid-Formmasse nach einem der Ansprüche 1 bis 13 oder bestehend aus dieser Polyamid-Formmasse.

15. Formkörper nach Anspruch 14, **dadurch gekennzeichnet, dass** es sich um einen mehrschichtigen Formkörper handelt.

16. Formkörper nach Anspruch 15 **dadurch gekennzeichnet, dass** der mehrschichtigen Formkörper aus einer Schicht (S1) enthaltend eine Polyamid-Formmasse nach einem der Ansprüche 1 bis 16 und mindestens einer weiteren Schicht (S2), (S3) oder (S4), die frei von Glasfüller (B) ist oder die einen im Vergleich zur Schicht (S1) reduzierten Anteil an Glasfüller (B) aufweist, gebildet ist.

## Claims

1. A polyamide molding compound comprising the following components or consisting of these components:
(A) 40 to 95 wt% of a polyamide mixture consisting of the polyamides (A1) and (A2), wherein
(A1) 42 to 68 wt% of at least one semi-crystalline polyamide is selected from the group comprising PA 46, PA 66, PA 66/6, PA 610, PA 612, PA 614, PA 615, PA 616, and mixtures thereof; and
(A2) 32 - 58 wt% of at least one transparent semi-aromatic polyamide having at least 30 mol% of monomers having aromatic structural units, with respect to the total quantity of diamines and dicarboxylic acids is in the polyamide (A2) that is amorphous or microcrystalline;
(B) 5 to 50 wt% of at least one glass filler having a refractive index, measured in accordance with method B of ISO 489 (1999-04) in the range from 1.540 to 1.600;
(C) 0 to 10 wt% of at least one additive;
wherein the weight proportions of the components (A) to (C) add up to 100% by weight of the component (A) and the weight proportions of the components (A1) and (A2) add up to 100% by weight of component (A);
wherein the at least one transparent polyamide (A2) has a transparency, measured in accordance with ASTM D1003 at a molded body (plate with the dimensions 60 × 60 × 2 mm) manufactured from the polyamides (A2) of at least 90% and a haze, measured in accordance with ASTM D1003 at a molded body (plate with the dimensions 60 × 60 × 2 mm) manufactured from the polyamides (A2) of at most 3%.

2. A polyamide molding compound in accordance with claim 1,
**characterized in that** the polyamide mixture (A) comprises 45 to 65 wt% polyamide (A1); and
comprises 35 to 55 wt% polyamide (A2); and/or
the proportion of component (A) in the polyamide molding compound is in the range from 49 to 90 wt% with respect to the sum of components (A) to (C); and/or
the proportion of component (B) in the polyamide molding compound is in the range from 10 to 45 wt% with respect to the sum of the components (A) to (C); and/or
the proportion of component (C) in the molding compound is in the range from 0 to 6 wt% with respect to the sum of components (A) to (C).

3. A polyamide molding compound in accordance with one of the preceding claims, **characterized in that** the polyamide (A1) is PA 66.

4. A polyamide molding compound in accordance with one of the preceding claims, **characterized in that** the at least one transparent polyamide (A2) comprises at least 35 mol% of monomers having aromatic structural units, with respect to the total quantity of diamines and dicarboxylic acids.

5. A polyamide molding compound in accordance with one of the preceding claims, **characterized in that** the monomers having aromatic structural units for the transparent polyamide (A2) are selected from the group comprising terephthalic acid, isophthalic acid, naphthalenedicarboxylic acid (NDA), biphenyldicarboxylic acid, 1,5-anthracene dicarboxylic acid, p-terphenylene-4,4'-dicarboxylic acid, and 2,5-pyridine dicarboxylic acid, xylylenediamine, and mixtures thereof.

6. A polyamide molding compound in accordance with one of the preceding claims, **characterized in that** the transparent polyamides (A2) are made up of the following monomers:
(a-A2) 0 to 100 mol% of cycloaliphatic diamines, with respect to the total quantity of diamines;
(b-A2) 0 to 100 mol% of diamines having aromatic structural units, with respect to the total quantity of diamines;
(cA-2) 0 oto 100 mol% of open-chain, aliphatic diamines, preferably having 6 to 10 carbon atoms, with respect to the total quantity of diamines;
(d-A2) 0 to 70 mol% of open-chain aliphatic dicarboxylic acids, with respect to the total quantity of dicarboxylic acids;
(e-A2) 30 to 100 mol% of aromatic dicarboxylic acids, with respect to the total quantity of dicarboxylic acids;
(f-A2) 0 to 70 mol% of cycloaliphatic dicarboxylic acids, with respect to the total quantity of dicarboxylic acids;
(g-A2) 0 to 40 wt% of lactams and/or aminocarboxylic acids having 6 to 12 carbon atoms, with respect to the total quantity of the monomers (a-A2) to (g-A2),
where the sum of the diamines (a-A2), (b-A2), and (c-A2) produces 100 mol%;
where the sum of the dicarboxylic acids (d-A2), (e-A2), and (f-A2) produces 100 mol%; and
where the sum of the monomers (b-A2) and (e-A2) amounts to at least 30 mol%, with respect to the sum of the total diamines and of the total dicarboxylic acids in the polyamide (A2).

7. A polyamide molding compound in accordance with claim 5,
**characterized in that**
the cycloaliphatic diamine (a-A2) is selected from the group comprising bis(4-amino-3-methylcyclohexyl)methane, bis-(4-aminocylcohexyl)methane, bis-(4-amino-3-ethylcyclohexyl)methane, bis-(4-amino-3,5,-dimethylcyclohexyl)methane, 2,6-norbornane diamine, 1,3-diaminocyclohexane, 1,4-diaminocyclohexanediamine, isophorone diamine, 1,3-bis-(aminomethyl)cyclohexane, 1,4-bis-(aminomethyl)cyclohexane, 2,2-(4,4'-diaminodicyclohexyl)propane, and mixtures thereof;
the aromatic diamine (b-A2) is selected from the group comprising xylylenediamine, and mixtures thereof;
and/or
the diamine (c-A2) is selected from the group comprising 1,4-butanediamine, 1,5-pentanediamine, 2-methyl-1,5,pentanediamine, hexanediamine, 2,2,4-trimethyl-1,6-hexamethylenediamine, 2,4,4-trimethyl-1,6-hexamethylenediamine, nonanediamine, 2-methyl-1,8-octanediamine, 1,10-decanediamine, 1,11-undecanediamine, 1,12-dodecanediamine, 1,13-tridecanediamine, 1,14-tetradecanediamine, 1,18-octadecanediamine, and mixtures thereof;
and/or
the aliphatic dicarboxylic acid (d-A2) is selected from the group comprising 1,6-apidic acid, 1,9-nonanedioic acid, 1,10-decanedioic acid, 1,11-undecanedioic acid, 1,12 dedecanedioic acis, 1,13-tricanedioic acid, 1,14-tetradecanedioic acid, 1,16-hexxdecanedioic acid, 1,18-octadecanedioic acid, and mixtures thereof;
and/or
the aromatic dicarboxylic acid (e-A2) is selected from the group comprising terephthalic acid, isophthalic acid, naphthalenedicarboxylic acid (NDA), biphenyldicarboxylic acid, anthracene dicarboxylic acid, p-terphenylene-4,4"-dicarboxylic acid, and 2,5-pyridinedicarboxylic acid, and mixtures thereof;
and/or
the cycloaliphatic dicarboxylic acid (f-A2) is selected from the group comprising 1,3-cyclopentanedicarboxylic acid, 1,3-cyclohexanedicarboxylic acid, 1,4-cyclohexanedicarboxylic acid, 2,3-norbornanedicarboxylic acid, 2,6-norbornanedicarboxylic acid, and mixtures thereof;
and/or
the lactam and/or the α,ω-aminocarboxylic acids (g-A1) and/or (g-A2) is/are selected from the group comprising m-aminobenzoic acid, p-aminobenzoic acid, caprolactam (CL), α,ω)-aminocaproic acid, α,ω-aminoheptanoic acid, α,ω-aminooctanoic acid, α,ω-aminononanoic acid, α,ω-aminodecanoic acid, α,ω-aminoundecanoic acid (AUA), laurolactam (LL), and α,ω-aminododecanoic acid (ADA).

8. A polyamide molding compound in accordance with one of the preceding claims, **characterized in that** the transparency measured in accordance with ASTM D1003 at a molded body (plate with the dimensions 60 × 60 × 2 mm) manufactured from the polyamide molding compound amounts to at least 80%; and/or
the haze measured in accordance with ASTM D1003 at a molded body (plate with the dimensions 60 × 60 × 2 mm) manufactured from the polyamide molding compound amounts to a maximum of 40%, .

9. A polyamide molding compound in accordance with one of the preceding claims, **characterized in that** the polyamide (A2) is selected from the group comprising PA 6I/6T, PA 10I/10T, PA DI/DT (D = 2-methyl-1,5-pentanediamine), PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 6I/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT, and mixtures thereof.

10. A polyamide molding compound in accordance with one of the preceding claims, **characterized in that** the at least one glass filler (B) is selected from the group comprising glass fibers, ground glass fibers, glass particles, glass flakes, glass spheres, hollow glass spheres, and combinations thereof, with the at least one glass filler having a refractive index, measured at a wavelength of 589 nm, from 1.545 to 1.590.

11. A polyamide molding compound in accordance with one of the preceding claims, **characterized in that**
the glass type of the at least one glass filler (B) is selected from the group comprising E-glass, E-CR-glass, R-glass and AR-glass.

12. A polyamide molding compound in accordance with one of the preceding claims, **characterized in that** the at least one additive (C) is selected from the group comprising inorganic and organic stabilizers, monomers, impact modifiers, lubricants, colorants, marking means, photochromic agents, demolding means, condensation catalysts, chain regulators, foaming agents, anti-blocking agents, optical brighteners, non-halogen flame retardants, natural sheet silicates, synthetic sheet silicates, nanoscale fillers having a particle size (*d*₉₀) of a maximum of 100 nm, and mixtures thereof.

13. A polyamide molding compound in accordance with one of the preceding claims, **characterized in that** component (A2) has a glass transition temperature determined in accordance with ISO 11357-2 of at least 120°C.

14. A molded body comprising or consisting of a polyamide molding compound in accordance with one of the claims 1 to 13.

15. A molded body in accordance with claim 14, **characterized in that** it is a multilayer molded body.

16. A molded body in accordance with claim 15, **characterized in that** the multilayer molded body is formed from a layer (S1) comprising a polyamide molding compound in accordance with one of the claims 1 to 16 and at least one further layer (S2), (S3), or (S4) that is free of glass fillers (B) or that has a proportion of glass filler (B) reduced in comparison with the layer (S1).

## Revendications

1. Matière à mouler en polyamide contenant les composantes suivantes ou constituée de ces composantes :
(A) de 40 à 95 % en poids d'un mélange de polyamides constitué des polyamides (A1) et (A2),
(A1) étant de 42 à 68 % en poids d'au moins un polyamide semi-cristallin choisi dans le groupe constitué par le PA 46, PA 66, PA 66/6, PA 610, PA 612, PA 614, PA 615, PA 616 et leurs mélanges ; et
(A2) étant de 32 à 58 % en poids d'au moins un polyamide transparent partiellement aromatique ayant au moins 30 % en moles de monomères ayant des motifs structuraux aromatiques, par rapport à la quantité totale de diamines et d'acides dicarboxyliques dans le polyamide (A2), qui est amorphe ou microcristallin ;
(B) de 5 à 50 % en poids d'au moins une charge de verre ayant un indice de réfraction, mesuré selon la méthode B de la norme ISO 489 (1999-04), compris dans la plage de 1 540 à 1 600 ;
(C) de 0 à 10 % en poids d'au moins un additif ;
les proportions en poids des composantes (A) à (C) se complétant à 100 % en poids et les proportions en poids des composantes (A1) et (A2) se complétant à 100 % en poids de la composante (A) ;
l'au moins un polyamide transparent (A2) présentant une transparence, mesurée sur un corps moulé (plaque ayant pour dimensions 60 × 60 × 2 mm) fabriqué à partir des polyamides (A2) selon ASTM D1003, d'au moins 90 % et un trouble, mesuré sur un corps moulé (plaque ayant pour dimensions 60 × 60 × 2 mm) fabriqué à partir des polyamides (A2) selon ASTM D1003, d'au plus 3 %.

2. Matière à mouler en polyamide selon la revendication 1, **caractérisée en ce que** le mélange de polyamides (A) est constitué de 45 à 65 % en poids de polyamide (A1) et
de 35 à 55 % en poids de polyamide (A2) ; et/ou
la proportion de la composante (A) dans la matière à mouler en polyamide est comprise dans la plage de 49 à 90 % en poids par rapport à la somme des composantes (A) à (C), et/ou
la proportion de la composante (B) dans la matière à mouler en polyamide se situe dans la plage de 10 à 45 % en poids par rapport à la somme des composantes (A) à (C), et/ou
la proportion de la composante (C) dans la matière à mouler se situe dans la plage de 0 à 6 % en poids par rapport à la somme des composantes (A) à (C).

3. Matière à mouler en polyamide selon l'une des revendications précédentes, **caractérisée en ce que** le polyamide (A1) est du PA 66.

4. Matière à mouler en polyamide selon l'une des revendications précédentes, **caractérisée en ce que** ledit au moins un polyamide transparent (A2) contient au moins 35 % en moles de monomères ayant des motifs structuraux aromatiques, par rapport à la quantité totale de diamines et d'acides dicarboxyliques.

5. Matière à mouler en polyamide selon l'une des revendications précédentes, **caractérisée en ce que** les monomères ayant des motifs structuraux aromatiques pour le polyamide transparent (A2) sont choisis dans le groupe constitué de l'acide téréphtalique, l'acide isophtalique, les acides naphtalène-dicarboxyliques (NDA), les acides biphényl-dicarboxyliques, l'acide 1,5-anthracène-dicarboxylique, l'acide p-terphény-lène-4,4'-dicarboxylique et l'acide 2,5-pyridine-dicarboxylique, les xy-lylènediamines, et leurs mélanges.

6. Matière à mouler en polyamide selon l'une des revendications précédentes, **caractérisée en ce que** les polyamides transparents (A2) sont constitués des monomères suivants :
(a-A2) de 0 à 100 % en moles de diamines cycloaliphatiques, par rapport à la quantité totale de diamines ;
(b-A2) de 0 à 100 % en moles de diamines ayant des motifs structuraux aromatiques, par rapport à la quantité totale de diamines ;
(c-A2) de 0 à 100 % en moles de diamines aliphatiques à chaîne ouverte, par rapport à la quantité totale de diamines ;
(d-A2) de 0 à 70 % en moles d'acides dicarboxyliques aliphatiques à chaîne ouverte, par rapport à la quantité totale d'acides dicarboxyliques ;
(e-A2) de 30 à 100 % en moles d'acides dicarboxyliques aromatiques, par rapport à la quantité totale d'acides dicarboxyliques ;
(f-A2) de 0 à 70 % en moles d'acides dicarboxyliques cycloaliphatiques, par rapport à la quantité totale d'acides dicarboxyliques ;
(g-A2) de 0 à 40 % en poids de lactames et/ou d'acides aminocarboxyliques ayant de 6 à 12 atomes de carbone, par rapport à la quantité totale des monomères (a-A2) à (g-A2) ;
la somme des diamines (a-A2), (b-A2) et (c-A2) étant égale à 100 % en moles ;
la somme des acides dicarboxyliques (d-A2), (e-A2) et (f-A2) étant égale à 100 % en moles ; et
la somme des monomères (b-A2) et (e-A2) étant d'au moins 30 % en moles par rapport à la somme des diamines totales et des acides dicarboxyliques totaux dans le polyamide (A2).

7. Masse à mouler en polyamide selon la revendication 5, **caractérisée en ce que** la diamine cycloaliphatique (a-A2) est choisie dans le groupe constitué par le bis-(4-amino-3-méthyl-cyclohexyl)-méthane, le bis-(4-amino-cyclohexyl)-méthane, le bis-(4-amino-3-éthyl-cyclohexyl)-méthane, le bis-(4-amino-3,5-diméthyl-cyclohexyl)-méthane, la 2,6-nor-bornanediamine, le 1,3-diaminocyclohexane, le 1,4-diaminocyclohexane, l'isophoronediamine, le 1,3-bis-(aminométhyl)cyclohexane, le 1,4-bis-(aminométhyl)cyclohexane, le 2,2-(4,4'-diaminodicyclo-hexyl)propane et leurs mélanges ;
la diamine aromatique (b-A2) est choisie dans le groupe constitué par la xylylènediamine, et ses mélanges ;
et/ou
la diamine (c-A2) est choisie dans le groupe constitué par la 1,4-butanediamine, la 1,5-pentanediamine, la 2-méthyl-1,5-pentanediamine, l'hexanediamine, la 2,2,4-triméthyl-1,6-hexaméthylènediamine, la 2,4,4-triméthyl-1,6-hexaméthylènediamine, la nonanediamine, la 2-méthyl-1,8-octanediamine, la 1,10-décanediamine, la 1,11-undécane-diamine, la 1,12-dodécanediamine, la 1,13-tridécanediamine, la 1,14-tétradécanediamine, la 1,18-octadécanediamine, et leurs mélanges ;
et/ou
l'acide dicarboxylique aliphatique (d-A2) est choisi dans le groupe constitué par l'acide 1,6-hexanedioïque, l'acide 1,9-nonane-dioïque, l'acide 1,10-décanedioïque, l'acide 1,11-undécanedioïque, l'acide 1,12-dodécanedioïque, l'acide 1,13-tridécanedioïque, l'acide 1,14-tétradécanedioïque, l'acide 1,16-hexadécanedioïque, l'acide 1,18-octadécanedioïque, et leurs mélanges ;
et/ou
l'acide dicarboxylique aromatique (e-A2) est choisi dans le groupe constitué par l'acide téréphtalique, l'acide isophtalique, les acides naphtalènedicarboxyliques (NDA), les acides biphényl-dicarboxyliques, l'acide 1,5-anthracènedicarboxylique, l'acide p-terphény-lène-4,4"-dicarboxylique et l'acide 2,5-pyridinedicarboxylique, et leurs mélanges ;
et/ou
l'acide dicarboxylique cycloaliphatique (f-A2) est choisi dans le groupe constitué par l'acide 1,3-cyclopentanedicarboxylique, l'acide 1,3-cyclohexanedicarboxylique, l'acide 1,4-cyclohexanedicarboxylique, l'acide 2,3-norbornanedicarboxylique, l'acide 2,6-norbornanedicarboxylique et leurs mélanges ;
et/ou
le lactame et/ou les acides α,ω-aminocarboxyliques (g-A1) et/ou (g-A2) sont choisis dans le groupe constitué par l'acide m-aminobenzoïque, l'acide p-aminobenzoïque, le caprolactame (CL), l'acide α,ω-aminocaproïque, l'acide α,ω-aminoheptanoïque, l'acide α,ω-aminoctanoïque, l'acide ct,Go-aminononanoïque, l'acide ccw-aminodécanoïque, l'acide α,ω-aminoundécanoïque (AUA), le laurine lactame (LL) et l'acide α,ω-aminodécanoïque (ADA).

8. Matière à mouler en polyamide selon l'une des revendications précédentes, **caractérisée en ce que** la transparence mesurée sur un corps moulé (plaque ayant pour dimensions 60 × 60 × 2 mm) fabriqué à partir de la matière à mouler en polyamide selon ASTM D1003 est d'au moins 80 %, et/ou
le trouble mesuré sur un corps moulé (plaque ayant pour dimensions 60 × 60 × 2 mm) fabriqué à partir de la matière à mouler en polyamide selon ASTM D1003 ne dépasse pas 40 %.

9. Matière à mouler en polyamide selon l'une des revendications précédentes, **caractérisée en ce que** le polyamide (A2) est choisi dans le groupe constitué par PA 6I/6T, PA 10I/10T, PA DI/DT (D = 2-méthyl-1,5-pentanediamine), PA MACMI/12, PA MACMI/1012, PA MACMT/12, PA MACMI/MACMT/12, PA MACMI/MACMT, PA MACMI/MACMT/MACM12, PA 6I/6T/MACMI/MACMT, PA 6I/6T/MACMI/MACMT/12, PA 61/MACMI, PA 6I/6T/PACMI/PACMT, PA 6I/612/MACMI/MACM12, PA 6T/612/MACMT/MACM12, PA 6I/6T/612/MACMI/MACMT/MACM12, PA 6I/6T/MACMI/MACMT/PACMI/PACMT, PA 6I/6T/MACMI/MACMT/PACMI/PACMT/12, PA MACMI/MACMT/MACM36, PA MACMI/MACM36, PA MACMT/MACM36, PA 12/PACMI, PA 12/MACMT, PA 6/PACMT, PA 6/PACMI, PA MXDI, PA MXDI/MXD6, PA MXDI/MXD10, PA MXDI/MXDT, PA MXDI/MACMI, PA MXDI/MXDT/MACMI/MACMT, PA 6I/6T/BACI/BACT, PA MACMI/MACMT/BACI/BACT, PA 6I/6T/MACMI/MACMT/BACI/BACT et leurs mélanges.

10. Matière à mouler en polyamide selon l'une des revendications précédentes, **caractérisée en ce que** l'au moins une charge de verre (B) est choisie dans le groupe constitué par des fibres de verre, des fibres de verre broyées, des particules de verre, des paillettes de verre, des billes de verre, des billes creuses de verre et leurs combinaisons, l'au moins une charge de verre ayant un indice de réfraction, mesuré à une longueur d'onde de 589 nm, de 1 545 à 1 590.

11. Matière à mouler en polyamide selon l'une des revendications précédentes, **caractérisée en ce que** le type de verre de l'au moins une charge de verre (B) est choisi dans le groupe constitué par le verre E, le verre ECR, le verre R et le verre AR.

12. Matière à mouler en polyamide selon l'une des revendications précédentes, **caractérisée en ce que** l'au moins un additif (C) est choisi dans le groupe constitué de stabilisants inorganiques et organiques, de monomères, de modificateurs de résistance au choc, de lubrifiants, de colorants, d'agents de marquage, d'agents photochromiques, d'agents de démoulage, de catalyseurs de condensation, de régulateurs de chaîne, d'agents antimousse, d'agents antiblocage, d'azurants optiques, d'agents ignifuges sans halogène, de phyllosilicates naturels, de phyllosilicates synthétiques, de charges à l'échelle nanométrique ayant une taille de particules (*d*₉₀) maximale de 100 nm et de leurs mélanges.

13. Matière à mouler en polyamide selon l'une des revendications précédentes, **caractérisée en ce que** la composante (A2) présente une température de transition vitreuse d'au moins 120 °C, déterminée selon la norme ISO 11357-2.

14. Corps moulé contenant une matière à mouler en polyamide selon l'une des revendications 1 à 13 ou constitué de cette matière à mouler en polyamide.

15. Corps moulé selon la revendication 14, **caractérisé en ce qu'**il s'agit d'un corps moulé multicouche.

16. Corps moulé selon la revendication 15, **caractérisé en ce que** le corps moulé multicouche est formé d'une couche (S1) contenant une matière à mouler en polyamide selon l'une des revendications 1 à 16 et d'au moins une couche supplémentaire (S2), (S3) ou (S4), qui est exempte de charge de verre (B) ou qui présente une proportion réduite de charge de verre (B) par rapport à la couche (S1).
